(19) Europäisches Patentamt
European Patent Office
Office européen des brevets

(11) **EP 3 228 987 B1**

(12) **FASCICULE DE BREVET EUROPEEN**

(45) Date de publication et mention
de la délivrance du brevet:
**16.11.2022 Bulletin 2022/46**

(21) Numéro de dépôt: **17164910.6**

(22) Date de dépôt: **05.04.2017**

(51) Classification Internationale des Brevets (IPC):
***G01C 19/72*** *(2006.01)*

(52) Classification Coopérative des Brevets (CPC):
**G01C 19/727**

(54) **GYROMETRE OPTIQUE RESONANT COMPACT A TROIS FREQUENCES**

KOMPAKTER OPTISCHER RESONANZMESSKREISEL MIT DREI FREQUENZEN

COMPACT RESONANT OPTICAL GYROMETER WITH THREE FREQUENCIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2016 FR 1600581**

(43) Date de publication de la demande:
**11.10.2017 Bulletin 2017/41**

(73) Titulaires:
* **THALES**
  **92400 Courbevoie (FR)**
* **CENTRE NATIONAL DE LA RECHERCHE SCIENTIFIQUE**
  **75016 Paris (FR)**
* **Ecole Normale Supérieure Paris-Saclay**
  **91190 Gif-sur-Yvette (FR)**

(72) Inventeurs:
* **SCHWARTZ, Sylvain**
  **78470 SAINT REMY LES CHEVREUSE (FR)**
* **FEUGNET, Gilles**
  **91120 PALAISEAU (FR)**
* **BRIGNON, Aranud**
  **92340 BOURG LA REINE (FR)**
* **BRETENAKER, Fabien**
  **78140 VELIZY VILLACOUBLAY (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 2 960 626     EP-A2- 2 813 815**

**Description**

**DOMAINE DE L'INVENTION**

Le domaine de l'invention est celui des gyromètres optiques, utilisés notamment dans le domaine de la navigation inertielle. Plus précisément, le domaine de l'invention est celui des gyromètres optiques passifs résonnants.

**ETAT DE LA TECHNIQUE**

Les gyromètres optiques reposent sur le principe de la mesure de l'effet Sagnac. Ce dernier induit, sous l'effet d'une rotation, une différence de temps de parcours entre deux signaux électromagnétiques se propageant dans des sens opposés le long d'un parcours en anneau. Cette différence de temps de parcours, proportionnelle à la vitesse angulaire du dispositif, peut être mesurée soit comme une différence de phase dans le cadre d'un montage interférométrique, soit comme une différence de fréquence propre entre les deux modes contrarotatifs d'une cavité en anneau.

Dans le premier cas, il est nécessaire d'utiliser une fibre optique pour maximiser la longueur de l'interféromètre et donc la sensibilité du dispositif. On parle alors de gyromètre interférométrique à fibre optique, connus sous l'acronyme « I-FOG ».

Dans le deuxième cas, la différence entre les fréquences propres des modes de la cavité peut être mesurée de deux façons. La première consiste à utiliser une cavité active, c'est-à-dire contenant un milieu amplificateur et à mesurer la différence de fréquence entre les modes contrarotatifs émis par la cavité. On parle alors de gyrolaser ou « RLG », acronyme de « Ring Laser Gyro ». La seconde façon consiste à utiliser une cavité résonante passive et à venir sonder les fréquences propres des modes contrarotatifs à l'aide d'un laser. On parle alors de gyromètre passif résonant.

Le gyromètre passif résonnant possède un certain nombre d'avantages par rapport à ses concurrents. Par rapport au RLG, il s'affranchit notamment de la nécessité d'utiliser un milieu amplificateur gazeux et du système d'électrodes à haute tension qui lui est habituellement associé. Par rapport à l'I-FOG, il présente l'avantage d'un chemin optique beaucoup plus court qui permet d'obtenir une moindre sensibilité à l'environnement ainsi qu'une plus grande compacité. Enfin, il ne met en jeu que des composants standards. On évite ainsi, en particulier, l'emploi de source superluminescente.

Toutefois, si ces trois types de gyromètres, I-FOG, RLG et gyromètre passif résonnant ont tous été démontrés expérimentalement, actuellement, seuls les deux premiers ont débouché sur des applications industrielles. Un frein au développement du gyromètre passif résonnant est dû au problème de la rétrodiffusion de la lumière, qui crée des couplages entre modes contrarotatifs, ce qui crée une non-linéarité de la réponse en fréquence, entraîne une « zone aveugle » comme sur les gyrolasers traditionnels et dégrade les performances du système.

Une solution au problème du couplage entre modes contrapropagatifs est décrite dans le document FR 1302311. Ce système sonde les fréquences propres des modes contrarotatifs d'une cavité en anneau en s'affranchissant des problèmes habituellement créés par la rétrodiffusion, tout en fournissant simultanément une mesure de la longueur de cavité destinée à évaluer (et possiblement à asservir à une valeur constante) le facteur d'échelle du gyromètre passif résonnant ainsi réalisé.

Le principe de ce système est d'utiliser trois faisceaux à trois fréquences différentes (au lieu de deux dans les gyromètres classiques). Le système comporte une cavité en anneau et un laser que l'on divise en trois faisceaux de fréquence optique différente. A titre d'exemple, la cavité peut être constituée d'une fibre creuse pour limiter l'effet Kerr. Chaque fréquence est séparée des deux autres fréquences d'une valeur correspondant à un multiple entier de l'intervalle spectral libre de la cavité. L'intervalle spectral libre ISL de la cavité vaut classiquement :

ISL = c/L c étant la vitesse de la lumière et L la longueur optique de la cavité en anneau.

Le premier faisceau est asservi sur un mode de la cavité dans un sens de propagation et les deux autres sont asservis sur deux autres modes de la cavité correspondant au sens de propagation opposé. Il est à noter qu'il est également possible de réaliser l'asservissement inverse, c'est-à-dire d'asservir une première fréquence propre correspondant à un premier mode de résonance de la cavité à la première fréquence du premier faisceau optique, en asservissant la longueur de la cavité par exemple.

Les fréquences des trois faisceaux sont à chaque instant suffisamment éloignées pour que l'effet des couplages entre les faisceaux puisse être rendu inopérant.

En l'absence de rotation, chaque faisceau est asservi sur une fréquence propre différente de la cavité que l'on note :

$$f_1 = N_1 . c/L$$

pour le premier faisceau ;

$$f_2 = N_2.c/L$$

pour le second faisceau ;

$$f_3 = N_3.c/L$$

pour le troisième faisceau ;

avec $N_1$, $N_2$ et $N_3$ nombres entiers deux-à-deux différents et connus.

Les fréquences doivent être suffisamment proches pour que la différence entre les fréquences de chaque paire de faisceaux puisse être compatible de la bande passante d'une photodiode.

Le document EP 2 813 815 A2 décrit un système pour mesurer une rotation à partir de l'injection de faisceaux dans une cavité. Les 3 lasers d'injection, c'est à dire les 3 lasers utilisés pour détecter la rotation, sont les trois lasers esclaves.

En présence d'une rotation, la différence de fréquences des deux faisceaux se propageant dans le même sens donne accès à la longueur de la cavité, tandis que la différence de fréquence entre deux faisceaux contrarotatifs combinée à l'information sur la longueur de la cavité donne accès à la vitesse angulaire de l'ensemble.

Ainsi un gyroscope fonctionnant avec 3 fréquences comprend des moyens de mesure de la différence de fréquences des deux faisceaux se propageant dans le même sens, et de la différence de fréquence entre deux faisceaux contrarotatifs, ces deux différences de fréquences combinées entre elles permettant de remonter à la longueur de la cavité et à la vitesse angulaire de la cavité selon un axe perpendiculaire à la cavité. Pour simplifier l'exposé ces moyens de mesure classiques ne sont pas représentés sur les figures.

En effet, en présence d'une rotation, les fréquences propres se décalent d'une quantité $\Omega$ proportionnelle à la vitesse angulaire, ce qui donne :

$$f_1 = N_1.c/L + \Omega/2 \; ;$$

$$f_2 = N_2.c/L - \Omega/2 \; ;$$

$$f_3 = N_3.c/L - \Omega/2$$

On connaît alors à chaque instant la longueur de la cavité en mesurant la différence de fréquence $\Delta fp$ entre les faisceaux se propageant dans le même sens, soit dans l'exemple ci-dessus $\Delta f_{2\text{-}3}$ :

$$L = \frac{(N_2 - N_3)}{\Delta f_{2-3}} \cdot c$$

On en déduit la vitesse de rotation en mesurant la différence de fréquence $\Delta fcp$ entre deux faisceaux se propageant en sens opposé, soit dans l'exemple ci-dessus $\Delta f_{1\text{-}2}$ :

$$\Omega = \Delta f_{1-2} - \Delta f_{2-3} \cdot \frac{(N_1 - N_2)}{(N_2 - N_3)}$$

L'architecture proposée dans le document FR 1302311 est présentée figure 1 avec des miroirs. Les traits pleins correspondent à des trajets optiques, et les traits en pointillé à des connexions électriques. Le laser L émet un faisceau qui est divisé en trois faisceaux F'1, F'2 et F'3. Pour simplifier l'exposé les moyens de mesure de $\Delta fp$ et de $\Delta f_{1\text{-}2}$ ne sont pas représentés.

F'1 est par exemple injecté dans la cavité optique annulaire C de longueur L dans le sens inverse des aiguilles d'une montre ou « CCW », acronyme de Counter Clock Wise en anglais, tandis que les deux faisceaux F'2 et F'3 sont injectés dans la cavité dans le sens des aiguilles d'une montre, « CW » acronyme de Clock Wise » en anglais. La partie transmise au travers du coupleur 10 (miroir partiellement réfléchissant) des faisceaux F'2 et F'3 traversent la fibre optique et sont réfléchis par le coupleur optique 11, puis le coupleur 10, de manière à constituer la cavité. La partie transmise au travers du coupleur 11 du faisceaux F'1 traverse la fibre optique et le coupleur 11, et est réfléchie par le coupleur 10 de manière à constituer la cavité.

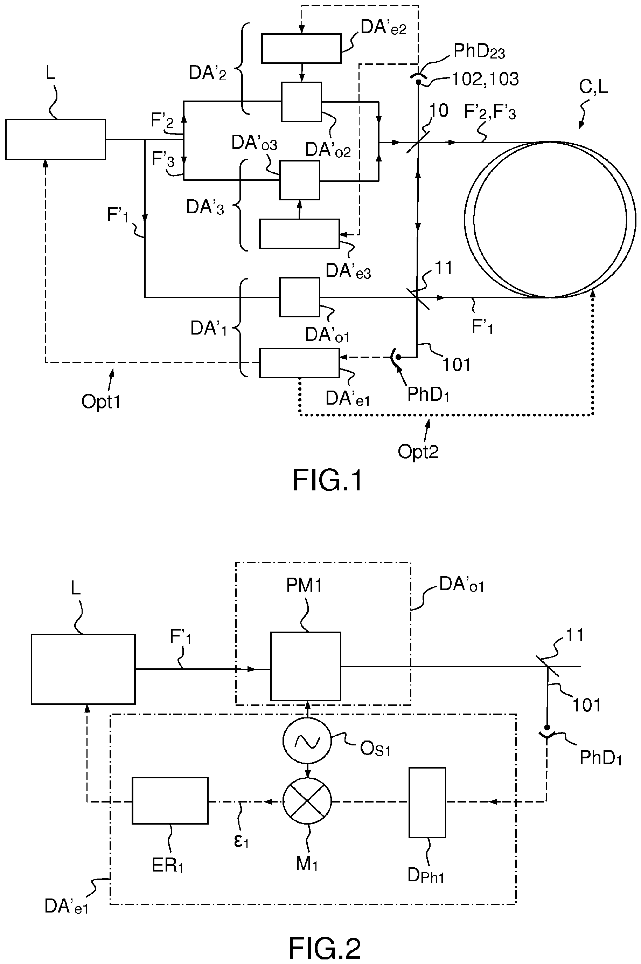

A la résonance, l'intensité retroréfléchie en sortie de cavité est minimale, et cette propriété est utilisée pour asservir les fréquences des trois faisceaux sur les modes propres de la cavité. Par exemple le faisceau 101 réfléchi par le coupleur 11 vers le bas de la figure 1 est utilisé pour asservir la fréquence de F'1. Il correspond à la superposition cohérente de la portion du faisceau F'1 directement réfléchi par 11 et de la portion constituée des faisceaux se propageant dans la cavité dans le sens CCW, qui résultent de la superposition des faisceaux ayant fait un, deux, trois....tours de la cavité dans le sens CCW. De même les faisceaux 102 et 103 se dirigeant vers le haut de la figure 1 sont utilisés respectivement pour asservir les fréquences de F'2 et F'3. Ils correspondent à la superposition cohérente de la portion de F'2 et F'3 directement réfléchie par le coupleur 10 et des portions de F'2 et F'3 transmises par ce coupleur 10, puis se propageant dans la cavité dans le sens CW, puis réfléchies par 11 et enfin transmises par 10, correspondant à la superposition des faisceaux ayant fait un, deux, trois etc....tours de la cavité dans le sens CW.

Le faisceau F'1 est asservi sur un mode propre de la cavité par une rétroaction directe sur le laser L à l'aide de la photodiode PhD1 et du dispositif d'asservissement DA'1, qui comporte une partie optique DA'o1 et une partie électrique DA'e1.

Les faisceaux F'2 et F'3 sont asservis sur des modes propres de la cavité à l'aide de la photodiode PhD23 et des dispositifs d'asservissement DA'2, DA'3, qui comporte chacun une partie optique agissant directement sur la fréquence optique (DA'o2, DA'o3) et une partie électrique (DA'e2, DA'e3).

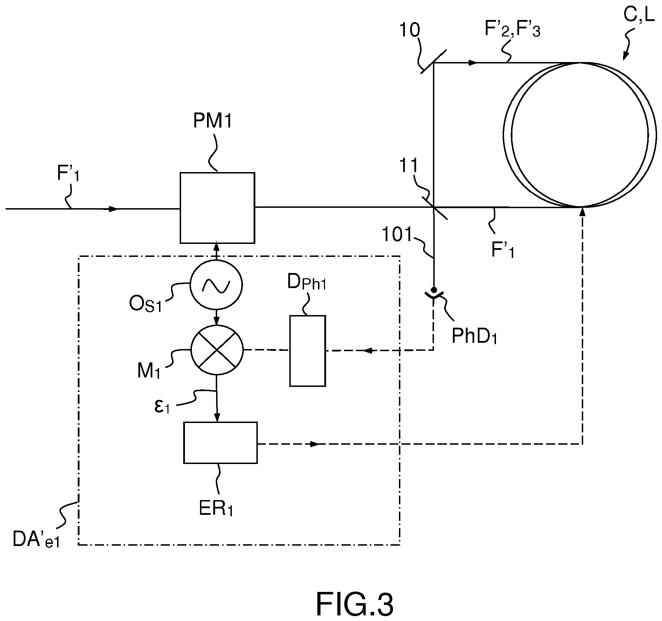

De manière plus générale, un des faisceaux présente une fréquence propre maintenue à résonance par un asservissement direct sur le laser, selon l'exemple non limitatif le faisceau F'1 (mais cela pourrait être l'un des deux autres faisceaux) selon une option Opt1 illustrée figure 2. Selon une autre option Opt2 illustrée figure 3, la fréquence du faisceau F'1 est maintenue à résonance en asservissant directement la longueur L de la cavité, par exemple à l'aide d'un modulateur piezo électrique.

Nous allons à présent expliciter la manière dont est réalisé l'asservissement direct sur le laser, tel qu'illustré figure 2. Le faisceau F'1 passe à travers un modulateur de phase PM1 pour générer des bandes latérales ou « side bands » nécessaires à l'obtention d'un signal d'erreur fréquentielle $\varepsilon$1 permettant d'asservir la fréquence pour obtenir (absence de rotation) ou conserver (présence de rotation) la fréquence du faisceau F'1 à résonance avec le mode de cavité considéré. Cette méthode est basée sur la technique dite de Pound Drever Hall, du nom de ses inventeurs et bien connue de l'homme de l'art.

Le faisceau 101 est modulé par un modulateur de phase PM1, placé dans la partie optique DA'o1, de manière à créer des composantes latérales, « side-bands », en fréquence séparées de la fréquence initiale f'1 par des multiples de la fréquence de modulation, $f_{m1}$, appliquée par l'oscillateur Os1 via PM1. Cette fréquence est choisie, si possible, pour être plus grande que la largeur de la résonance de la cavité (et plus petite que l'intervalle spectral libre de la cavité) de manière à ce que les bandes latéralesne soient pas à résonance avec la cavité. Pour simplifier l'explication, on ne considéra que les deux premières side-bands, séparées de $\pm f_{m1}$ de la fréquence initiale f'1. Le faisceau 101 (qui a donc trois composantes spectrales à f'1-$f_{m1}$, f'1, et f'1+$f_{m1}$) est détecté sur une photodiode PhD$_1$ dont le signal de sortie est démodulé par le signal de modulation appliqué à PM1 avec un ajustement de leur phases respectives (déphaseur Dph1) nécessitant l'utilisation d'un mélangeur électrique M1. Un filtre passe bas (non représenté) permet alors de ne garder que la composante continue du signal démodulé dont l'amplitude, $\varepsilon$1, est alors proportionnelle à l'écart entre la fréquence f'1 du laser et la fréquence de résonance de la cavité. En effet, lorsque la fréquence f'1 du laser et la fréquence de résonance da la cavité s'écartent un peu, les deux side-bands sont inchangées (si elles sont bien hors résonances) alors que la phase et l'amplitude du faisceau à la fréquence f'1 évoluent (puisqu'il n'est plus à résonance). Les propriétés de cohérence entre les trois composantes spectrales de 101 permettent alors une mesure de ces fluctuations (interférence à trois faisceaux) qui se traduisent par cette variation linéaire du signal démodulé qui peut être ainsi utilisé en tant que signal d'erreur fréquentielle, $\varepsilon$1 s'annulant lorsque le faisceau F'1 est résonnant avec un mode de la cavité. On réalise alors un asservissement avec ce signal, via une électronique de rétroaction ER1, selon les procédés classiques d'asservissement, par exemple, sans être restrictif, avec une électronique de rétroaction PI ou PID pour Proportionnelle Intégrale Dérivée, allusion aux trois modes d'action sur le signal d'erreur de l'électronique de rétroaction. Ce type de rétroaction permettant de faire converger le signal d'erreur vers une valeur nulle est bien connu en automatique.

Concernant le choix de la fréquence de modulation à appliquer à PM1, si la finesse de la cavité est grande, la largeur de la cavité sera faible devant l'intervalle spectral libre et la fréquence de modulation pourra être choisie très grande devant la largeur fréquentielle des pics de résonance de la cavité. On sera alors dans la situation optimale, correspondant à l''explication précédente, pour cet asservissement. A l' opposé, si la finesse de la cavité n'est pas très grande, la fréquence de modulation sera proche de la largeur fréquentielle des pics de résonance de la cavité. Les side-bands sont alors partiellement modifiées quand la fréquence f'1 s'écarte de la résonance et l'asservissement est moins performant.

La boucle d'asservissement rétroagit sur le laser par exemple via le courant injecté (figure 2) de manière à obtenir (absence de rotation) ou conserver (présence de rotation angulaire $\Omega$) la fréquence du laser f'1 sur une fréquence de résonance de la cavité :

$$f'1 = N_1.c/L + \Omega/2$$

Sur le mode de réalisation de la figure 3, l'asservissement est réalisé sur la longueur de la cavité, la fréquence du laser restant fixe.

Ainsi, la partie optique DA'o1 du dispositif d'asservissement DA'1 comprend le modulateur de phase PM1, la partie électrique DA'e1 en sortie du photo-détecteur $PhD_1$ comprend une partie démodulation comprenant le déphaseur PhD1, le mélangeur M1, et l'oscillateur Os1 à la fréquence $f_{m1}$ qui sert également à alimenter PM1, et l'électronique de rétroaction ER1.

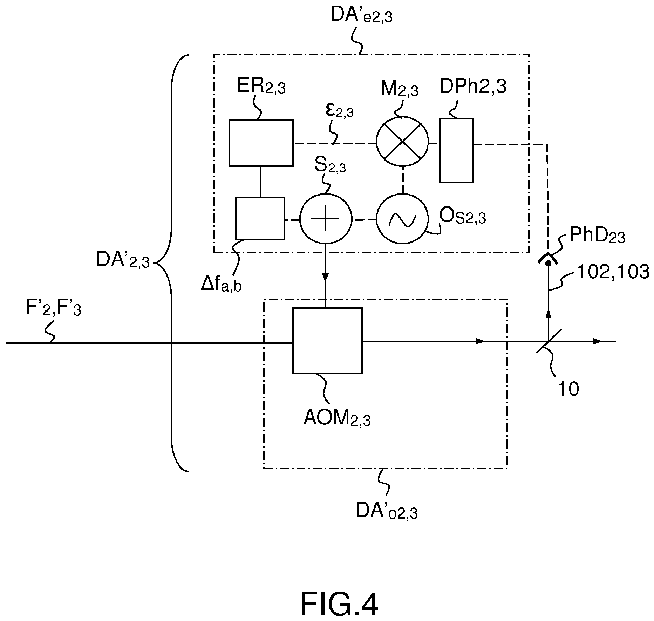

Un exemple d'asservissement des fréquences f2 et f3 respectivement des faisceaux F'2 et F'3 est schématisé figure 4. Le dispositif d'asservissement est le même que pour F'1. Mais, comme il n'y a qu'un seul laser (ou qu'une seule cavité) on ne peut plus agir sur ces éléments. Il convient donc d'introduire deux composants supplémentaires pour récupérer deux degrés de liberté supplémentaires permettant d'asservir f2 et f3.

Ainsi le faisceau F'2 passe à travers un modulateur acousto-optique AOM2 destiné à en modifier la fréquence, (on peut alternativement utiliser un modulateur de phase permettant de faire des changements de fréquence par modulation serrodyne), puis la partie transmise est injectée dans la cavité dans le sens de propagation CW.

En l'absence de rotation, la valeur moyenne du décalage en fréquence, noté $\Delta$fa sur la figure 4, est choisie égale à un multiple de l'intervalle spectral libre ISL. A cette valeur moyenne est également ajouté (via l'AOM2) un signal de modulation destiné à générer les side-bands nécessaires pour obtenir le signal permettant d'asservir cette valeur moyenne de façon à obtenir (absence de rotation) ou conserver (présence de rotation) la fréquence du faisceau F'2 à résonnance avec le mode de cavité considéré. La fréquence f'2 du faisceau F'2 est alors asservie via $\Delta$fa sur un mode propre de la cavité dont on choisi l'écart à la fréquence f'1, et vérifie, en tenant compte d'une éventuelle rotation à la vitesse angulaire $\Omega$ :

$$f'2 = (N_1 + 1).c/L + \Omega/2 \quad \text{soit} \quad \Delta fa = c/L - \Omega/2$$

Pour cela, le faisceau 102 décrit précédemment est détecté sur une photodiode $PhD_{23}$ (qui est la même pour les deux faisceaux F'2 et F'3). Il est ensuite traité de la même manière qu'explicité pour le faisceau F'1 avec les même considérations concernant le choix de la fréquence de l'oscillateur local Osc2 (fréquence $f_{m2}$) qui module AOM2 et sert lors de la phase de démodulation.

Un signal d'erreur $\varepsilon 2$ est ainsi généré s'annulant lorsque le faisceau F'2 est résonnant avec le mode de la cavité.

Il est procédé de même avec F'3 sauf que la fréquence de l'oscillateur Osc3 est différente de celle de l'oscillateur Osc2 mais doit respecter les même critères que F'1 et F'2 par rapport à la largueur fréquentielle des pics de résonance de la cavité et son intervalle spectral libre. Il est ainsi possible à partir du signal unique délivré par la photodiode PhD23 de générer les deux signaux d'erreurs fréquentielle distincts, $\varepsilon 2$ et $\varepsilon 3$, pour respectivement F'2 et F'3.

Ce signal $\varepsilon 2$ est utilisé par l'électronique de rétroaction ER2 par exemple type PID pour rétroagir sur le modulateur acousto optique AOM2, de façon à maintenir la fréquence f'2 du faisceau F'2 à résonnance avec le mode de la cavité. Pour cela, le signal de modulation précité est obtenu via l'additionneur S2 et l'oscillateur Os2, en générant les bandes latérales (« side bands » en anglais) permettant d'obtenir le signal modulé qui est détecté sur la photodiode.

Ainsi, la partie optique DA'o2 du dispositif d'asservissement DA'2 comprend le modulateur acousto-optique AOM2, la partie électrique DA'e2 en sortie du photo-détecteur $PhD_{23}$ comprend le déphaseur Dph2, le mélangeur M2, l'oscillateur Os2, l'additionneur S2, et l'électronique de rétroaction ER2.

Dans ce système les modulateurs acousto-optique sont utilisés à la fois pour asservir la fréquence du faisceau correspondant (f'2 ou f'3) sur une fréquence propre de la cavité, différente de la fréquence f'1 et présentant un décalage par rapport à f'1 choisi (et correspondant à un multiple entier d'ISL différent pour chaque faisceau), et pour suivre en temps réel le décalage de cette fréquence propre dû à la rotation $\Omega$. Le modulateur acousto optique doit donc être capable d'opérer un décalage de fréquence d'au moins un intervalle spectral libre ISL (à minima par exemple N2=N1+1 et N3 =N1+2), ce qui introduit une limitation sur la longueur minimale de la cavité.

Un AOM est typiquement limité à un décalage de l'ordre de 1 GHz soit une cavité d'une longueur de 20 cm (en prenant dans cet exemple une cavité en fibre optique d'indice 1.5). Une cavité d'une longueur nettement plus petite n'est donc plus compatible. De plus les AOM sont encombrants et consomment beaucoup de puissance (typiquement les puissances RF peuvent de l'ordre de plusieurs Watt). Pour réaliser une cavité suffisamment longue, tout en maintenant, pour des raisons d'encombrement, un diamètre de quelques cm à une dizaine de centimètres, on réalise une cavité avec une fibre optique qui fait plusieurs tours.

Ainsi, la présence de modulateurs acousto-optique dans le système 3 fréquences du document FR 1302311 le rend incompatible d'une cavité « courte ».

Or réaliser un gyromètre optique à cavité courte présente plusieurs avantages :

- réduction de la sensibilité thermique de la fibre en diminuant le nombre de tours,
- compatibilité avec une cavité en espace libre avec des miroirs (un seul tour), ce qui présenterait l'avantage de supprimer l'effet Kerr qui est un effet nonlinéaire connu pour limiter la précision des gyroscopes à fibre résonant ou pas,
- compatibilité avec l'optique intégrée, la technologie actuelle limitant à un le nombre de tour. En effet pour faire plusieurs tours, il faudrait réaliser des croisements sans pertes ou bien un circuit en optique intégrée non planaire de manière à ce que le chemin permettant de reboucler la cavité passe en dessous ou en dessus pour éviter les croisements. A noter également que les modulateurs acousto-optique sont pour l'instant difficilement réalisables en optique intégrée.

Un but de la présente invention est de palier aux inconvénients précités en proposant un gyromètre résonant 3 fréquences compatibles d'une cavité courte et/ou compatible avec une réalisation des fonctionnalités optiques en optique intégrée.

## DESCRIPTION DE L'INVENTION

La présente invention a pour objet un gyromètre optique passif résonnant selon la revendication 1 et comprenant une cavité et fonctionnant avec trois fréquences, et comprenant :

- un premier laser d'injection configuré pour injecter un premier faisceau optique dans la cavité dans un premier sens,
- un deuxième laser d'injection configuré pour injecter un deuxième faisceau optique dans la cavité selon un sens opposé au premier sens,
- un troisième laser d'injection configuré pour injecter un troisième faisceau optique dans la cavité selon l'un des deux sens précités,
  un laser parmi l'un des lasers d'injection étant choisi comme laser maître présentant une fréquence maître, les deux autres laser d'injection étant dénommés respectivement premier et deuxième lasers esclaves présentant respectivement une première et une deuxième fréquence esclave,
- un dispositif d'asservissement maître configuré pour asservir directement la fréquence maître à une fréquence propre correspondant à un mode de résonance de la cavité ou pour asservir une fréquence propre correspondant à un mode de résonance de la cavité à la fréquence maître du laser maître,
- un premier étage d'asservissement comprenant un premier et un deuxième dispositif esclave configurés respectivement pour générer un premier et un deuxième signal d'erreur fréquentielle présentant une valeur absolue minimale respectivement lorsque les première et deuxième fréquences esclaves correspondent chacune à un mode de résonance de la cavité,
- un deuxième étage d'asservissement comprenant un premier et un deuxième dispositif de verrouillage de phase optique comprenant respectivement un premier et un deuxième oscillateur esclaves configurés pour générer un premier et d'un deuxième signal de décalage radiofréquence,

lesdits premier et un deuxième dispositif de verrouillage de phase optique étant configurés pour rendre cohérent respectivement le premier laser esclave avec le laser maître et le deuxième laser esclave avec le laser maître et pour asservir la première et la deuxième fréquence esclave sur des modes de résonances de la cavité différents du mode de résonance correspondant à la fréquence maître,
chaque signal de décalage radiofréquence du deuxième étage d'asservissement étant déterminé à partir du signal d'erreur fréquentielle correspondant du premier étage d'asservissement.

Préférentiellement le gyromètre selon l'invention comprend en outre:

- un premier photo détecteur configuré pour recevoir un ou des faisceaux optiques issus du ou des faisceaux optique injectés dans le premier sens et dont au moins une partie a effectué au moins une traversée de la cavité, et
- un deuxième photo détecteur configuré pour recevoir le ou les faisceaux optiques issus du ou des faisceaux optique injectés dans le deuxième sens et dont au moins une partie a effectué au moins une traversée de la cavité, lesdits photo-détecteurs étant configurés pour générer trois signaux électriques à partir des trois faisceaux optiques reçus, chaque signal électrique étant envoyé dans le dispositif d'asservissement maître ou dans le premier ou dans le deuxième dispositif esclave correspondant.

Selon un mode de réalisation le dispositif d'asservissement maître comprend :

- un modulateur de phase maître du faisceau optique du laser maître,
- un dispositif de démodulation maître disposé à la sortie du photo détecteur correspondant: un déphaseur maître, un oscillateur maître fonctionnant à une fréquence d'oscillation maître prédéterminée également utilisée par le modulateur de phase maître, un mélangeur maître des signaux issus de l'oscillateur et du déphaseur maîtres, un signal d'erreur fréquentielle maître étant obtenu à partir du signal issu du mélangeur maître,
- une électronique de rétroaction maître configurée pour générer un signal de correction à partir du signal d'erreur fréquentielle maître, et pour rétroagir directement sur la fréquence maître du laser maître ou sur une longueur de la cavité, la fréquence du laser maître restant fixe.

Selon un mode de réalisation le modulateur de phase maître est constitué d'un signal électrique modulant directement le courant d'alimentation du laser maître (L1) à la fréquence d'oscillation maître prédéterminée (fm1). Avantageusement le dispositif d'asservissement maître est de type Pound Drever Hall.

Selon un mode de réalisation chaque dispositif esclave du premier étage d'asservissement comprend :

- un modulateur de phase du faisceau optique du laser esclave correspondant,
- un dispositif de démodulation disposé à la sortie du photo-détecteur ayant détecté le faisceau optique correspondant, et comprenant un déphaseur, un oscillateur fonctionnant à une fréquence d'oscillation prédéterminée également utilisée par le modulateur de phase correspondant, un mélangeur des signaux issus de l'oscillateur et du déphaseur, le signal d'erreur fréquentielle étant obtenu à partir du signal issu du mélangeur,
- une électronique de rétroaction configurée pour générer un signal de correction à partir du signal d'erreur fréquentielle.

Avantageusement le modulateur de phase est constitué d'un signal électrique modulant directement le courant d'alimentation du laser esclave correspondant à la fréquence d'oscillation prédéterminée.

Selon l'invention les premier et deuxième dispositif à verrouillage de phase optique comprennent respectivement un troisième et un quatrième photo détecteur configuré pour générer respectivement un premier et un deuxième signaux de battement, respectivement entre un faisceau optique issu du laser maître et un faisceau optique issu du premier laser esclave et entre un faisceau optique issu du laser maître et un faisceau optique issu du deuxième laser esclave.

Selon l'invention chaque signal de décalage radiofréquence présente une fréquence de référence accordable et une phase de référence, et chaque dispositif de verrouillage de phase optique est configuré pour rétroagir sur la fréquence du laser esclave correspondante de manière à asservir le signal de battement sur le signal de décalage radiofréquence, la fréquence de référence étant rendue égale à un nombre entier d'intervalles spectraux libres de la cavité en utilisant un signal de correction issu du signal d'erreur fréquentielle correspondant, chaque fréquence esclave étant alors respectivement décalée de la fréquence maître d'une valeur correspondant à la fréquence de référence correspondante.

Avantageusement le nombre entier est tel que la fréquence de référence correspondante est comprise dans une bande passante du troisième ou du quatrième photo-détecteur correspondant.

Selon un mode de réalisation chaque dispositif à verrouillage de phase optique comprend un mélangeur configuré pour convertir une fréquence du signal de battement en une fréquence convertie dans le domaine radiofréquence, l'asservissement s'opérant à partir de la fréquence convertie. Selon l'invention chaque dispositif à verrouillage de phase optique comprend, pour réaliser l'asservissement du signal de battement sur le signal de décalage radiofréquence :

- un comparateur de phase configuré pour comparer respectivement une phase du signal de battement ou du signal converti et la phase du signal de décalage radiofréquence, le comparateur étant configuré pour générer un signal d'erreur de phase,
- une électronique de rétroaction configurée pour générer un signal de correction et rétroagir sur la fréquence esclave du laser esclave à partir du signal d'erreur de phase.

Selon une variante, le premier et le deuxième photo-détecteur sont configurés pour recevoir des faisceaux optiques au moins partiellement réfléchis par la cavité.

Selon une autre variante le premier et le deuxième photo-détecteur sont configurés pour recevoir des faisceaux optiques transmis par la cavité.

Selon un mode de réalisation un bloc optique comprenant les trajets des faisceaux optiques et les composants optiques nécessaires à la mise en œuvre du gyromètre selon l'invention est réalisé sous la forme d'un circuit en photonique intégrée.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée illustre l'architecture d'un gyromètre passif résonnant 3 fréquences selon l'état de la technique.

La figure 2 déjà citée illustre d'un gyromètre passif résonnant 3 fréquences selon l'état de la technique avec un asservissement direct sur le laser correspondant d'une des fréquences.

La figure 3 déjà citée illustre d'un gyromètre passif résonnant 3 fréquences selon l'état de la technique avec un asservissement de la longueur de la cavité, la fréquence du laser restant fixe.

La figure 4 déjà citée illustre l'asservissement des deux autres fréquences.

La figure 5 illustre un gyromètre optique passif résonnant 50 fonctionnant avec 3 fréquences selon l'invention.

La figure 6 illustre un mode de réalisation du gyromètre 50 selon l'invention et détaille plus particulièrement les différents composants utilisés.

La figure 7 illustre le principe d'un asservissement fondé sur une boucle à verrouillage de phase optique.

La figure 8 schématise un mode de réalisation du gyromètre selon l'invention dont la cavité comprend deux coupleurs en espace libre et une fibre optique.

La figure 9 schématise un mode de réalisation du gyromètre selon l'invention particulièrement bien adapté lorsque la cavité est constituée d'une fibre optique.

La figure 10 schématise un mode de réalisation du gyromètre selon l'invention dans lequel le premier et le deuxième photo-détecteur sont configurés pour recevoir des faisceaux optiques correspondant à des faisceaux optiques transmis par la cavité.

La figure 11 illustre un gyromètre selon l'invention comprenant un circuit photonique réalisé en optique intégrée.

## DESCRIPTION DETAILLEE DE L'INVENTION

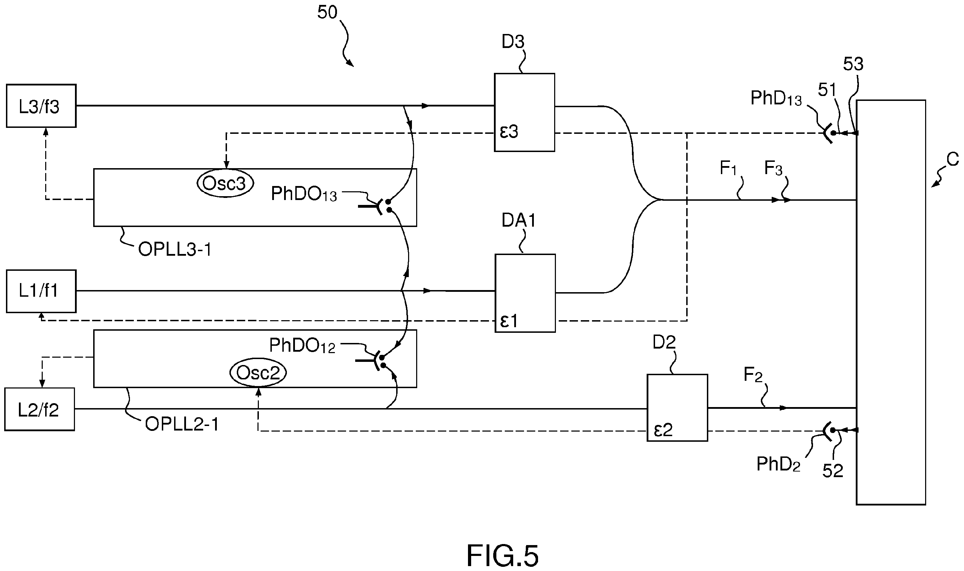

La figure 5 illustre un gyromètre optique passif résonnant 50 fonctionnant avec 3 fréquences selon l'invention. Pour simplifier l'exposé les moyens de mesure de $\Delta$fp et de $\Delta$f$_{1-2}$ (voir état de la technique) ne sont pas représentés. On décrira ici le mode d'obtention des 3 fréquences adéquates.

Le gyromètre 50 3 fréquences comprend une cavité C de longueur L. Il comprend un premier laser d'injection L1 configuré pour injecter un premier faisceau optique F1 dans la cavité dans un premier sens, un deuxième laser d'injection L2 configuré pour injecter un deuxième faisceau optique F2 dans la cavité selon un sens opposé au premier sens, et un troisième laser d'injection L3 configuré pour injecter un troisième faisceau optique F3 dans la cavité selon l'un des deux sens précités.

Dans l'exemple non limitatif de la figure 5, les faisceaux F1 et F3 sont injectés dans le sens CW et le faisceau F2 est injecté dans le sens CCW.

Un laser parmi l'un des lasers d'injection L1, L2 et L3 est choisi comme laser maître, dans l'exemple il s'agit de L1 mais n'importe lequel des trois lasers laser peut être choisi comme laser maître. Le laser maître présente une fréquence maître, ici f1.

Les deux autres lasers d'injection sont dénommés respectivement premier laser esclave, L2 dans l'exemple de la figure 5, et deuxième laser esclave, L3 dans l'exemple de la figure 5. Le premier laser esclave présente une première fréquence esclave, f2 dans l'exemple de la figure 5, et le deuxième laser esclave L3 présente une deuxième fréquence esclave, f3 dans l'exemple de la figure 5. Dans la suite de l'exposé les explications sont données avec L1 comme laser maître et L2 et L3 comme lasers esclaves, mais l'invention s'applique de manière identique pour tout autre choix du laser maître et des lasers esclaves.

Le gyromètre 50 selon l'invention comprend également un dispositif d'asservissement maître DA1 configuré pour asservir directement la fréquence maître f1 à une fréquence propre de la cavité. L'asservissement s'effectue de manière classique, comme par exemple décrit dans l'état de la technique à partir du signal d'erreur fréquentielle $\varepsilon$1.

Selon une première option le signal d'erreur $\varepsilon1$ est utilisé pour changer la fréquence du laser maître en agissant sur l'entrée disponible (par exemple une modulation du courant pour un laser semi-conducteur), l'asservissement s'opérant directement sur la fréquence du laser pour qu'elle corresponde à un mode de résonnance de la cavité comme illustré figure 5 (voir également figure 2).

Selon une deuxième option le signal d'erreur $\varepsilon1$ est utilisé pour moduler la longueur de la cavité via une cale piézoélectrique (par exemple pour un laser fibre) afin d'asservir une fréquence propre correspondant à un mode de résonance de la cavité sur la fréquence du laser maître restant fixe (voir figure 3).

Le gyromètre 50 selon l'invention comprend en outre un premier étage d'asservissement comprenant un premier dispositif esclave, D2 dans l'exemple, associé au premier laser esclave et un deuxième dispositif esclave, D3 dans l'exemple, associé au deuxième laser esclave. Le premier dispositif esclave D2 est configuré pour générer un premier signal d'erreur fréquentielle, $\varepsilon$2 dans l'exemple de la figure 5, présentant une valeur absolue minimale lorsque la première fréquence esclave f2 correspond à un mode de résonance de la cavité. Le deuxième dispositif esclave D3 est configuré pour générer un deuxième signal d'erreur fréquentielle, $\varepsilon$3 dans l'exemple de la figure 5, présentant une valeur absolue minimale lorsque la deuxième fréquence esclave f3 correspond à un mode de résonance de la cavité. Typiquement les signaux d'erreur fréquentiels sont obtenus par des moyens classiques décrit dans l'état de la technique. Ces signaux d'erreur permettent de quantifier l'écart de la fréquence des lasers esclaves à la résonance et sont utilisés par un deuxième étage d'asservissement du gyromètre 50 selon l'invention.

Le deuxième étage d'asservissement comprend un premier dispositif de verrouillage de phase optique OPLL2-1 comprenant un premier oscillateur Osc2 (associé au premier laser esclave L2) configuré pour générer un premier signal de décalage radiofréquence (« RF offset signal » en anglais), le premier dispositif de verrouillage de phase optique OPLL2-1 étant configuré pour rendre cohérent le premier laser esclave L2 avec le laser maître L1 et pour asservir la première fréquence esclave f2 sur un mode de résonance de la cavité différent du mode de résonance correspondant à la fréquence maître f1. Typiquement le signal de décalage radiofréquence présente une fréquence comprise entre quelques dizaines de MHz, pour des cavités à base de fibres optiques, jusqu'à plusieurs dizaines de GHz pour des cavités miniatures en optique intégrée, l'écart maximum étant limitée de toute manière par la bande passante maximale des détecteurs (typiquement entre 40 et 100 GHz à 1.5 $\mu$m)..

Le deuxième étage d'asservissement comprend également un deuxième dispositif de verrouillage de phase optique OPLL3-1 comprenant un deuxième oscillateur Osc3 (associé au deuxième laser esclave L3) configuré pour générer un deuxième signal de décalage radiofréquence, le deuxième dispositif de verrouillage de phase optique OPLL3-1 étant configuré pour rendre cohérent le deuxième laser esclave L3 avec le laser maître L1 et pour asservir la deuxième fréquence esclave f3 sur un mode de résonance de la cavité différent du mode de résonance correspondant à la fréquence maître f1. Le laser maître L1 est donc le laser directement asservi sur la cavité et sert de laser de référence sur lequel on boucle en phase les deux autres laser dénommés esclaves. L'invention utilise donc deux dispositifs de verrouillage de phase optique, dénommés OPLL en anglais pour Optical Phase Lock Loop, pour rendre cohérents les lasers esclaves avec le laser maître et pour faire laser les deux lasers esclaves sur des fréquences de résonnance de la cavité C.

Pour cela, chaque signal de décalage radiofréquence du deuxième étage d'asservissement est déterminé à partir du signal d'erreur fréquentielle $\varepsilon2$, $\varepsilon3$ correspondant du premier étage d'asservissement. En d'autres termes, pour chaque laser esclave, le gyromètre selon l'invention utilise le signal d'erreur fréquentielle généré par le premier étage d'asservissement pour piloter l'oscillateur de la boucle à verrouillage de phase correspondante. Le fonctionnement détaillé d'une boucle OPLL et des modes de réalisation particuliers de mise en œuvre des deux boucles OPLL du gyromètre selon l'invention sont décrits plus loin.

Cette architecture présente l'avantage, par rapport à l'architecture 3 fréquences de l'état de la technique, de supprimer les modulateurs acousto-optiques. Pour mémoire ces modulateurs permettaient à partir d'un seul laser d'avoir trois faisceaux à des fréquences différentes et pourtant chacun à résonance avec la cavité. Le gyromètre selon l'invention comprend trois lasers indépendants que l'on rend cohérents entre eux tout en s'assurant qu'ils aient chacun une fréquence différente et soient en résonnance avec la cavité. Grace à l'utilisation de ces trois lasers indépendants, il est possible d'avoir des écarts de fréquence bien plus grands qu'avec des modulateurs acousto-optiques et également d'améliorer la compacité.

Les relations de cohérence entre les faisceaux sont obtenues et contrôlées par les OPLL. Les signaux d'erreur fréquentielles $\varepsilon2$ et $\varepsilon3$ permettent d'asservir respectivement la fréquence de l'oscillateur de l'OPLL2-1 (entre le faisceau F1 et le faisceau F2) et la fréquence de l'oscillateur de l'OPLL3-1 (entre le faisceau F1 et le faisceau F3) pour que respectivement le premier laser esclave L2 et le deuxième laser esclave L3 soient à résonance.

Préférentiellement le gyromètre 50 selon l'invention comprend également un premier photo détecteur PhD13 configuré pour recevoir un ou des faisceaux optiques issus du ou des faisceaux optiques injectés dans le premier sens et dont au moins une partie a effectué au moins une traversée de la cavité, et un deuxième photo détecteur PhD2 configuré pour recevoir un ou des faisceaux optiques issus des faisceaux optiques injectés dans le deuxième sens et dont au moins une partie a effectué au moins une traversée de la cavité.

Ces photo-détecteurs peuvent être disposés à plusieurs endroits par rapport à la cavité en fonction du type de cavité et du type de faisceau optique recueilli (réfléchis ou transmis), comme décrit plus loin. Dans l'exemple de la figure 5, le détecteur PhD13 reçoit les faisceaux 51 et 53 issus des faisceaux injectés dans le sens CW F1 et F3, et le détecteur PhD2 reçoit le faisceau 52 issu du faisceau injecté dans le sens CCW F2.

Les photo-détecteurs PhD13 et PhD2 sont configurés pour générer trois signaux électriques à partir des 3 signaux optiques détectés 51, 52 et 53.

Le détecteur PhD13 détecte les deux signaux 51 et 53 susceptibles de battre ensemble, mais l'étape de démodulation opérée ensuite sur chacun des signaux électrique permet de ne récupérer que le signal d'intérêt.

Chaque signal électrique est envoyé dans le dispositif correspondant. Dans l'exemple, le signal électrique issu du faisceau optique 51 (F1) constitue l'entrée du dispositif d'asservissement maître DA1, le signal électrique issu du faisceau optique 52 (F2) constitue l'entrée du deuxième dispositif esclave D2, et le signal électrique issu du faisceau optique 53 (F3) constitue l'entrée du dispositif premier dispositif esclave D1.

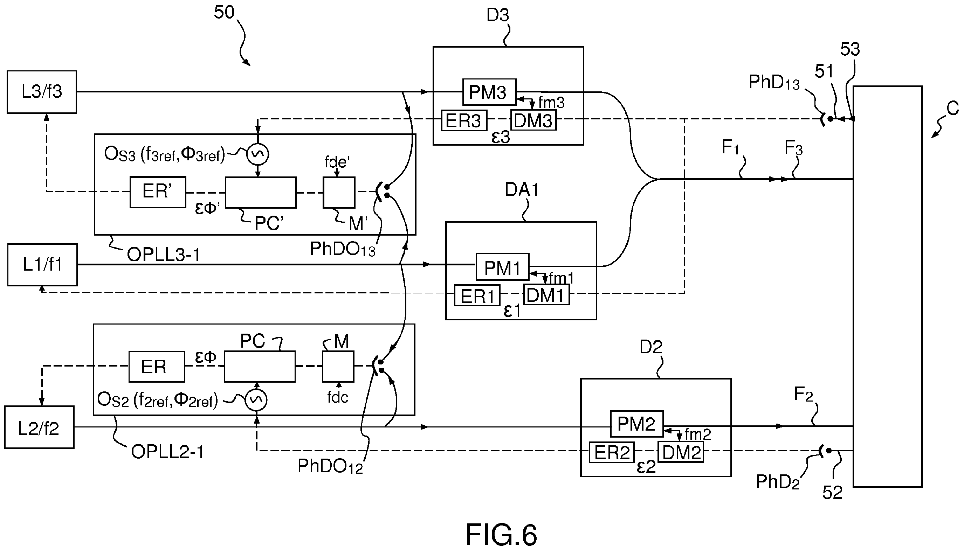

La figure 6 illustre un mode de réalisation du gyromètre 50 selon l'invention et détaille plus particulièrement les différents composants utilisés.

Avantageusement le dispositif d'asservissement maître DA1 est du type décrit dans l'état de la technique sur les figures 2 ou 3. Il comprend un modulateur de phase maître PM1 du faisceau optique issu du laser maître L1 et un dispositif de démodulation maître DM1 agissant sur le signal électrique issu du photo-détecteur correspondant PhD13. Le dispositif DM1 comprend un déphaseur maître, un oscillateur maître Osc1 fonctionnant à une fréquence d'oscillation maître prédéterminée fm1 également utilisée par le modulateur de phase maître et un mélangeur maître des signaux issus de l'oscillateur maître et du déphaseur maître, le signal d'erreur fréquentielle maître ε1 étant obtenu à partir du signal issu du mélangeur maître. Le dispositif DA1 comprend également une électronique de rétroaction maître ER1 configurée pour générer un signal de correction à partir du signal d'erreur fréquentielle maître ε1, et rétroagir directement sur la fréquence maître f1 du laser maître L1 ou rétroagir sur la longueur L de la cavité, la fréquence du laser maître restant fixe.

Avantageusement le dispositif d'asservissement maître DA1 est de type Pound Drever Hall.

Selon une variante, le modulateur de phase maître est constitué d'un signal électrique modulant directement le courant d'alimentation du laser maître L1 à la fréquence d'oscillation maître prédéterminée fm1. On utilise donc, pour générer les « side bands », une modulation directe du courant du laser L1 à la même fréquence fm1, lorsque par exemple le laser d'injection maître L1 est une diode laser, à la place d'un composant PM1 modulateur de phase.

La figure 6 décrit également un exemple de dispositifs esclaves D2 et D3. Ces dispositifs présentent une architecture sensiblement identique à celle du dispositif d'asservissement maître DA1 ;

Avantageusement, chaque dispositif esclave D2 ou D3 du premier étage d'asservissement comprend :

-un modulateur de phase PM2 ou PM3 du faisceau optique F2 ou F3 du laser esclave correspondant L2 ou L3.

Selon une variante le modulateur de phase est constitué d'un signal électrique modulant directement le courant d'alimentation du laser esclave correspondant L2, L3, à la fréquence d'oscillation prédéterminée fm2, fm3.

On utilise ainsi à la place des composants PM2 et/ou PM3 modulateurs de phase, pour générer les « side bands », une modulation directe du courant des lasers L2 et L3 aux même fréquences fm2, fm3, lorsque par exemple les lasers d'injection L2 et L3 sont des diodes lasers.

Chaque dispositif esclave du premier étage d'asservissement comprend également un dispositif de démodulation DM2 ou DM3 disposé à la sortie du photo-détecteur ayant détecté le faisceau optique correspondant, 52 détecté par PhD2 ou 53 détecté par PhD13. Chaque dispositif de démodulation comprend un déphaseur, un oscillateur fonctionnant à une fréquence d'oscillation prédéterminée fm2 ou fm3 également utilisée par le modulateur de phase correspondant, un mélangeur des signaux issus de l'oscillateur et du déphaseur, le signal d'erreur fréquentielle ε2 ou ε3 étant obtenu à partir du signal issu du mélangeur,

- une électronique de rétroaction ER2 ou ER3 configurée pour générer un signal de correction à partir du signal d'erreur fréquentielle ε2, ε3.

Les signaux d'erreur ε2, ε3 ne sont pas utilisés pour asservir directement la fréquence du laser correspondant L2, L3 sur un mode de la cavité. Ils sont utilisés comme signal de correction pour fixer la fréquence du signal de décalage radiofréquence, comme expliqué plus loin.

Nous allons à présent décrire le deuxième étage d'asservissement basé sur le principe de l'OPLL.

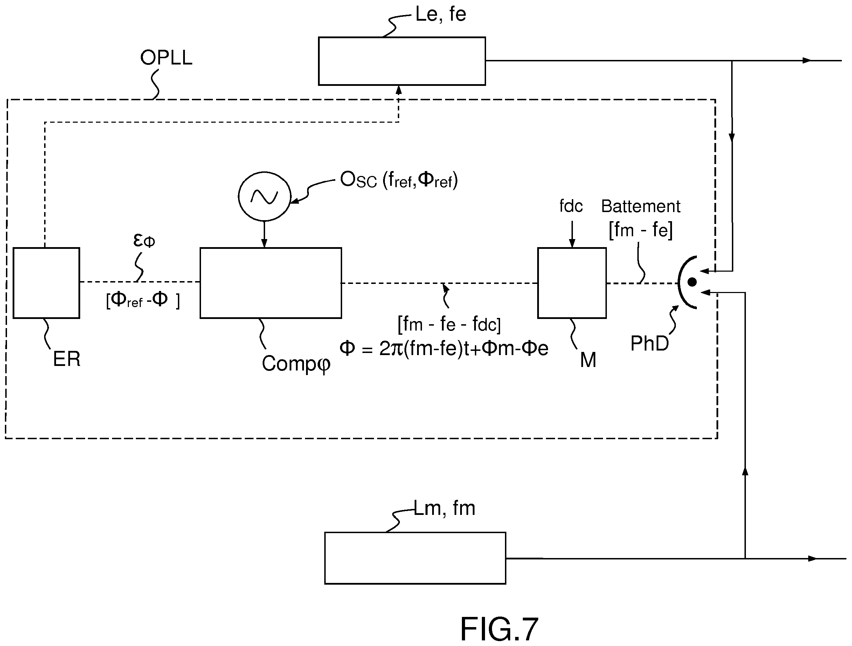

Le fonctionnement d'une OPLL est calqué sur le principe du verrouillage de phase ou PLL pour Phase Lock Loop, et adapté pour opérer sur la phase relative entre deux faisceaux optiques par transposition sur un signal électrique. Le principe d'un tel asservissement est illustré figure 7.

On cherche à asservir une fréquence esclave fe d'un laser esclave Le à la fréquence maître fm d'une laser maître.

Rappelons que la fréquence d'un signal f est proportionnelle à la dérivée de la phase φ du signal par rapport au temps. Rendre la différence de phase entre un signal esclave à asservir et un signal de référence, par exemple nulle, permet d'obtenir une fréquence esclave fe asservie à la fréquence maître fm.

En d'autres termes une OPLL est configurée pour réaliser l'asservissement à partir d'un signal d'erreur $\varepsilon_\Phi$ fonction d'une différence de phase entre d'une part le battement fm-fe entre la fréquence maître et la fréquence esclave et d'autre part un signal de référence présentant une fréquence de référence fref prédéfinie.

Selon un mode de réalisation préféré, la boucle à verrouillage de phase OPLL comprend une photodiode PhD qui détecte les faisceaux optiques issus du laser maître et esclave, et plus particulièrement le signal de battement entre ces fréquences, de fréquence fm-fe. La fréquence du laser esclave fe est asservie sur la fréquence du laser maître fm (elle-même directement asservie sur un mode de résonance du la cavité du gyromètre), à partir de ce battement fm-fe que l'on souhaite régler sur une valeur prédéterminée.

Lorsque la fréquence de battement entre les deux lasers est typiquement de l'ordre de grandeur du Gigahertz, la comparaison de phase entre ces signaux est très complexe à mettre en œuvre. On réalise alors une conversion de la fréquence de battement fm-fe en un signal converti de fréquence inférieure fm-fe-fdc à l'aide d'un mélangeur M, cette opération étant dénommé « down conversion » en anglais. Le but est de rendre la fréquence du signal à asservir compatible avec la plage de fonctionnement du comparateur de phase Compφ. Le signal obtenu de fréquence fm-fe-fdc et de phase $\Phi=2\pi(fm-fe-fd)t+\Phi m-\Phi e$ (on suppose que l'oscillateur à la fréquence fd pour utiliser la down-conversion a une phase suffisamment stable pour ne pas être prise en compte) présente typiquement une fréquence comprise entre 1 et 500 MHz. Préférentiellement un filtre est ajouté après le mélangeur pour ne sélectionner que le signal d'intérêt de fréquence fm-fe-fdc selon la plage souhaitée.

La boucle OPLL comprend également un oscillateur de référence Osc configuré pour générer un signal de décalage radiofréquence présentant une fréquence de référence radio fref et une phase de référence Φref.

Puis le comparateur de phase Compφ génère un signal d'erreur $\varepsilon_\Phi$ fonction de la différence de phase Φ - Φref entre le signal converti et le signal de référence radio.

Enfin un dispositif électronique de rétroaction ER génère un signal de correction et rétroagit sur la fréquence esclave fe du laser esclave de manière à minimiser le signal d'erreur $\varepsilon_\Phi$. Pour le cas d'une diode laser DFB, typiquement on agit sur le courant d'alimentation du laser, la fréquence optique étant fonction du courant.

Typiquement à l'allumage, au bout d'un certain temps, la fréquence du signal de battement converti se verrouille sur la fréquence fref choisie de l'oscillateur avec :

$$fm - fe - \ fd = +/- \ fref$$

Le laser esclave présente alors une fréquence esclave égale à la fréquence maître décalée de la fréquence de référence et de la fréquence de down-conversion:

Ainsi lorsque l'on fait battre deux faisceaux optique issus de deux sources sur un photo détecteur, et que leurs fréquences sont suffisamment proches pour la bande passante du détecteur, on obtient un signal de battement sinusoïdal dont la durée, la stabilité en fréquence, la stabilité en phase et en amplitude dépend du degré de cohérence entre les deux sources. Plus les sources sont cohérentes (on les suppose d'intensités constantes), plus ce signal de battement ressemble à un signal sinusoïdal issu d'un générateur électrique avec de faibles fluctuations de la fréquence et de la phase (peu de discontinuités, de sauts, ou d'écarts passagers à un sinus).

L'objectif d'une OPLL est d'asservir le signal de battement entre deux lasers, éventuellement ramené par décalage dans le domaine des fréquences accessibles aux comparateurs de phase, sur un oscillateur de référence (donc bien stable), le signal de décalage radiofréquence, de manière à ce que ce signal de battement soit un sinus aussi stable que possible de celui délivré par l'oscillateur de référence (on suppose que le signal de down conversion est suffisamment stable pour ne pas être pris en compte).

Une fois ce régime atteint, les deux lasers, précédemment indépendants, ont une relation de cohérence entre eux.

Le gyromètre selon l'invention utilise d'une manière originale deux boucles à verrouillage de phase optique. La relation de cohérence ente les trois lasers d'injection du gyromètre est obtenue grâce à deux boucles de verrouillage de phase optique, une entre le laser maître et un premier esclave, et une autre entre le laser maître et un deuxième esclave.

Selon l'invention pour recueillir les signaux de battement, le premier dispositif à verrouillage de phase optique OPLL2-1 comprend un troisième photo-détecteur PhDO12 qui reçoit les faisceaux optiques issus du laser maître L1 et du premier laser esclave L2 et qui génère un premier signal de battement électrique entre les faisceaux optiques reçus. De même selon l'invention le deuxième dispositif à verrouillage de phase optique OPLL3-1 comprend un quatrième photo-détecteur PhDO13 qui reçoit les faisceaux optiques issus du laser maître L1 et du deuxième laser esclave L3 et qui génère un deuxième signal de battement électrique entre les faisceaux optiques reçu.

De plus, si pour chaque OPLL l'oscillateur de référence est accordable, et qu'un des deux lasers (le laser maître), est asservi sur une résonnance de la cavité, alors on peut accorder la fréquence de l'oscillateur de référence pour que la fréquence du signal de battement entre les deux faisceaux (qui est idéalement un signal sinusoïdal maintenu par l'OPLL) corresponde à un nombre entier d'ISL de la cavité. Le laser esclave lase alors également sur un mode de résonnance de la cavité différent du mode de résonance du laser maître.

Ainsi selon l'invention, le premier signal de décalage radiofréquence présente une première fréquence de référence f2ref accordable et une phase de référence Φ2ref, et le premier dispositif de verrouillage de phase optique OPLL2-1est configuré pour rétroagir sur la fréquence f2 du premier laser esclave L2 de manière à asservir le premier signal de battement, éventuellement converti dans le domaine basse fréquence, sur le premier signal de décalage radiofréquence, la première fréquence de référence f2ref sans down-conversion ou la somme de la première fréquence de référence f2ref et de la fréquence de down-conversion fdc dans le cas contraire, étant rendue égale à un nombre entier n1 d'intervalle spectral libre ISL de la cavité en utilisant le signal de correction issu du premier signal d'erreur fréquentielle $\varepsilon2$ délivré par le premier étage d'asservissement.

De même, selon l'invention, le deuxième signal de décalage radiofréquence présente une deuxième fréquence de référence f3ref accordable et une phase de référence Φ3ref, et le deuxième dispositif de verrouillage de phase optique OPLL3-1 est configuré pour rétroagir sur la fréquence f3 du deuxième laser esclave L3 de manière à asservir le deuxième signal de battement, éventuellement converti dans le domaine basse fréquence, sur le deuxième signal de décalage radiofréquence, la deuxième fréquence de référence f3ref sans down-conversion ou la somme de la deuxième fréquence de référence f3ref et de la fréquence de down-conversion fdc' dans le cas contraire, étant rendue égale à un nombre entier n2 d'intervalle spectral libre ISL de la cavité en utilisant le signal de correction issu du deuxième signal d'erreur fréquentielle ε3 délivré par le premier étage d'asservissement.

Lorsque les fréquences sont verrouillées et en absence de rotation, la fréquence esclave f2 est décalée de la fréquence maître f1 d'une valeur correspondant à la fréquence de référence f2ref+fd = n1.ISL .

$$f2-f1 = +/- (f2ref+fd) = +/- n1.ISL$$

De même la fréquence esclave f3 est décalée de la fréquence maître f1 d'une valeur correspondant à la fréquence de référence f3ref+fd = n2.ISL .

$$F3-f1 = +/- (f3ref+fd) = +/- n2.ISL$$

Lorsque le gyromètre subit une rotation angulaire, les fréquences de résonance évoluent dans le temps. Le fonctionnement de l'asservissement s'apparente à celui d'un système bouclé dont on change le point de fonctionnement pour assurer le suivi des résonnances.

Un mode de réalisation des OPLL est décrit figure 6.

Selon l'invention chaque dispositif à verrouillage de phase optique OPLL2-1 (OPLL3-1) comprend, pour réaliser l'asservissement du signal de battement sur le signal de décalage radiofréquence :

- un comparateur de phase PC (PC') configuré pour comparer une phase du signal de battement ou du signal converti Φ2 (Φ3) et la phase Φ2ref (Φ3ref) du signal de décalage radiofréquence correspondant, le comparateur étant configurés pour générer un signal d'erreur de phase εφ (εΦ'),
- une électronique de rétroaction ER (ER') configurée pour générer un signal de correction et rétroagir sur la fréquence esclave f2 (f3) du laser esclave L2 (L3) à partir du signal d'erreur de phase εφ (εΦ').

Par rapport à l'utilisation d'un laser unique et de modulateurs acousto optiques, on obtient un gyromètre 3 laser dans lequel :

- les relations de cohérence entre les faisceaux sont obtenues et contrôlées par les OPLL
- les écarts en fréquence entre les trois faisceaux, permettant d'asservir la fréquence de chaque faisceau pour obtenir (absence de rotation) ou conserver (présence de rotation) leur résonance sont contrôlés via le contrôle de la fréquence de l'oscillateur de référence de chacune des OPLL
- le signal d'erreur ε1 permet comme précédemment d'asservir le laser L1 sur la cavité ou réciproquement.
- les signaux d'erreur ε2 et ε3 permettent d'asservir respectivement la fréquence f2ref de l'oscillateur de l'OPLL1-2 et la fréquence f3ref de l'OPLL1-3 pour que L2 et L3 soient à résonance.

Pour assurer un bon fonctionnement des OPLL les nombres entiers n1, n2 et les fréquences fdc et fdc' de down conversion sont tels que les fréquences de référence correspondante f2ref, f3ref sont comprises dans une bande passante de photo-détecteur correspondant.

Selon un mode de réalisation illustré figure 6 une « down conversion » est nécessaire et dans ce cas chaque dispositif à verrouillage de fréquence optique OPLL1-2 (OPLL1-3) comprend un mélangeur M (M') configuré pour convertir une fréquence du signal de battement f2-f1 (f3-f1) en une fréquence convertie f2-f1-fdc (f3-f1-fdc') dans le domaine radiofréquence, l'asservissement s'opérant à partir de la fréquence convertie.

Typiquement chaque fréquence convertie est comprise entre 1 et 500 MHz. Une telle fréquence est compatible d'un comparateur de phase réalisé en optique intégrée.

Selon une variante un filtre est disposé en sortie de chaque mélangeur.

Le gyromètre selon l'invention peut fonctionner à partir de différents signaux optiques 51, 52, 53 reçu par le premier PhD13 et deuxième PhD2 détecteurs.

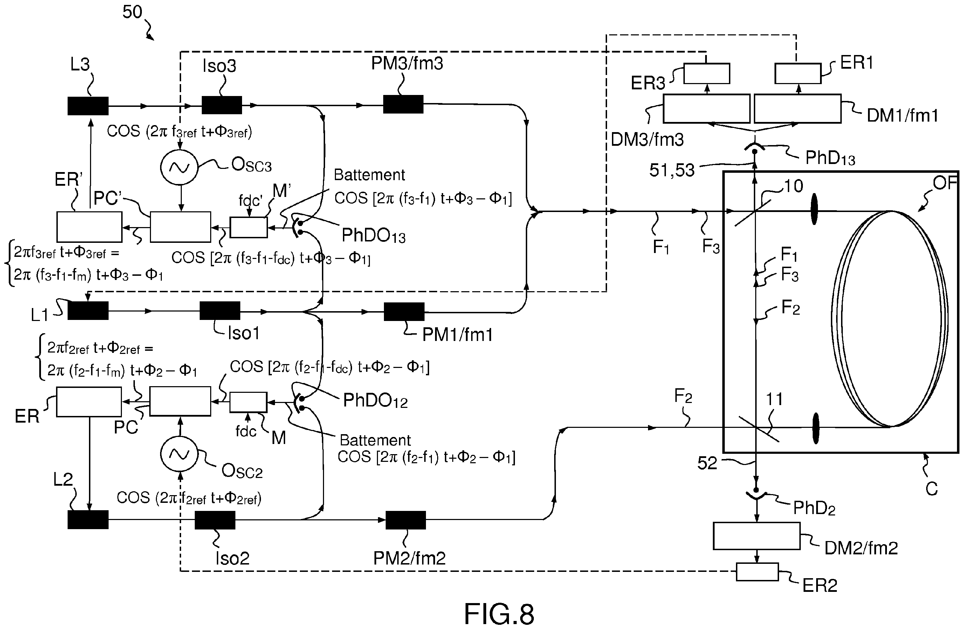

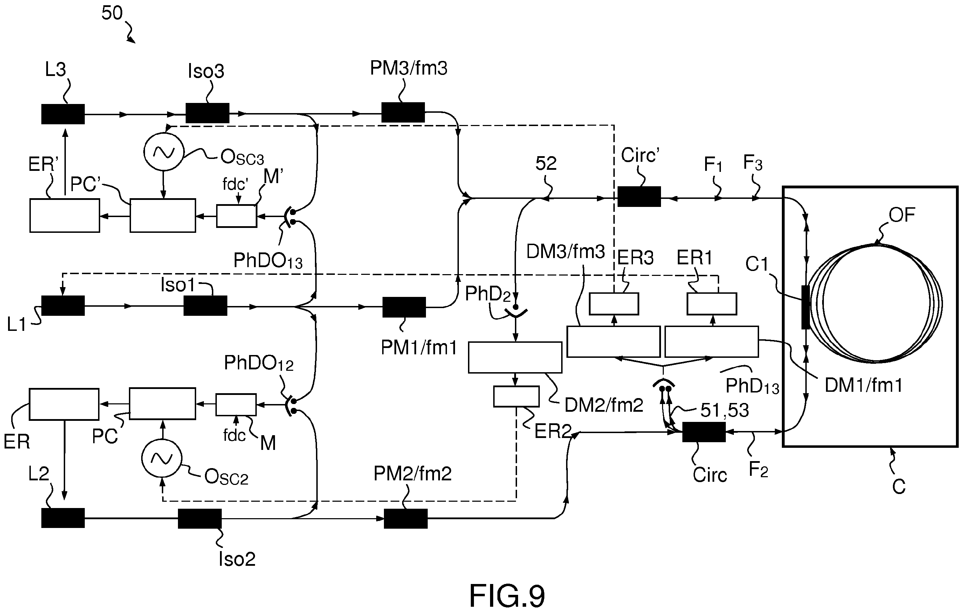

Selon un premier mode de réalisation illustré figures 8 et 9 le premier et le deuxième photo-détecteur sont configurés pour recevoir des faisceaux optiques 51, 52, 53 correspondant à des faisceaux optiques au moins partiellement réfléchis par la cavité. Lorsque les intensités réfléchies sont utilisées, celles-ci sont maximales hors résonance et minimales à résonance et l'asservissement est adapté en conséquence. Des circulateurs Circ et Circ' sont insérés sur le chemin des faisceaux optiques pour bien séparer les faisceaux réfléchis des faisceaux incidents dans le cas d'une réalisation en fibre optique (figure 9). L'utilisation de faisceaux réfléchis pour délivrer les signaux d'erreurs ε1, ε2 et ε3 est la plus optimale, car dans ce cas la valeur maximale de la fréquence de modulation de PM1, PM2 et PM3 n'est limitée que par l'intervalle spectral libre ISL.

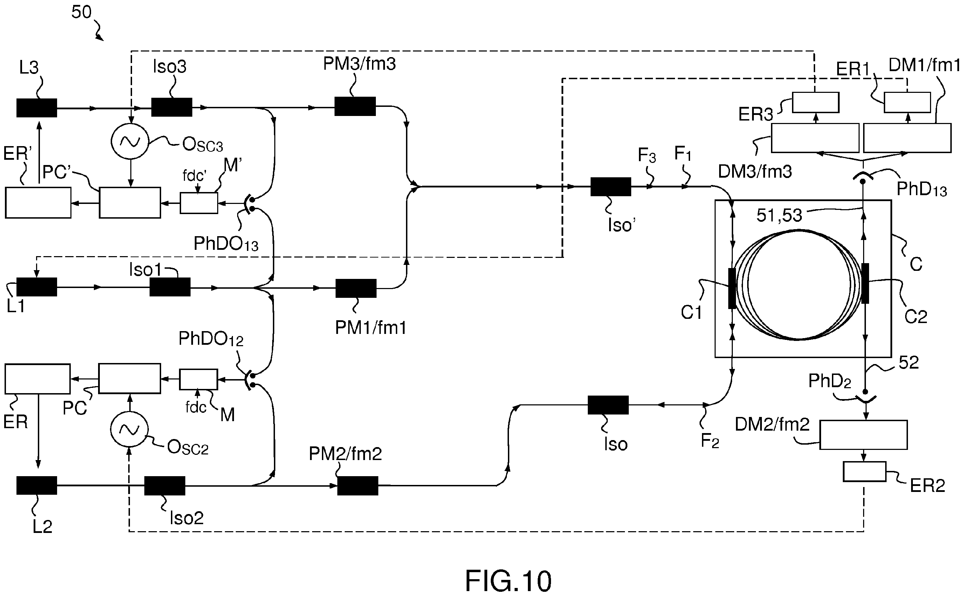

Selon un deuxième mode de réalisation illustré figure 10, le premier et le deuxième photo-détecteur sont configurés pour recevoir des faisceaux optiques 51, 52, 53 correspondant à des faisceaux optiques transmis par la cavité. Lorsque les intensités transmises sont utilisées, celles-ci sont minimales hors résonnance et maximales à résonnance et l'asservissement est adapté en conséquence. Un avantage est que, les lasers comprenant généralement des isolateurs, la présence des isolateurs Iso et Iso' n'est pas indispensable, et la réalisation de la cavité C et des coupleurs C1 et C2 est compatible d'une implémentation en optique intégrée.

Le gyromètre selon l'invention est également compatible avec tout type de cavité, espace libre, fibre creuse, résonateur en optique intégrée...

Selon un mode de réalisation la cavité C du gyromètre 50 comprend deux coupleurs en espace libre 10, 11, le reste de la cavité étant par exemple en espace libre, avec des miroirs) ou comprenant une fibre optique OF, tel qu'illustré figure 8.

Un autre mode de réalisation illustré figure 9 est particulièrement bien adapté lorsque la cavité est constituée d'une fibre optique OF. La cavité comprend, outre la fibre optique OF, un premier coupleur 2 par 2 C1, ce premier coupleur étant configuré pour injecter les faisceaux optiques F1, F2, F3 dans la cavité et pour diriger les faisceaux optiques réfléchis 51, 52, 53 par la cavité vers le premier PHD13 et le deuxième photo détecteur PhD2.

Selon un autre mode de réalisation la cavité fibrée comprend un premier coupleur 2 par 2 C1 et un deuxième coupleur 2 par 2 C2, le premier coupleur C1 étant configuré pour injecter les faisceaux optiques F1, F2, F3 dans la cavité, le deuxième coupleur C2 étant configuré pour diriger les faisceaux optiques 51, 52, et 53 transmis par la cavité vers le premier PHD13 et le deuxième PhD2 photo détecteur.

Un exemple d'ordre de grandeur pour le gyromètre 50 est donné ci après à titre non limitatif.

On considère des lasers d'injection L1 L2 et L3 de type semi-conducteur ou à fibre optique émettant sur une longueur d'onde de 1.55 $\mu$m par exemple. On considère une cavité de longueur 5 cm d'indice 1.6 réalisé en optique intégrée (dans cet exemple en $Si_3N_4$ pour avoir de faibles pertes de propagations) , soit un ISL de 3.75 GHz .Cette longueur est un bon compromis car on ne cherche pas forcément à faire des cavité très petites car la sensibilité dépend de la surface .

Pour une fréquence maître f1 d'environ $1.94 \times 10^{14}$Hz ($\lambda$= 1.55 $\mu$m) on a donc N1 de l'ordre de 51000 .

On cherche à décaler les fréquences esclaves f2 et f3 d'au moins une valeur entière d'ISL ;
On peut faire +1. ISL (N2 = N1+1), et -1.ISL(N3 = N1 -1)

Ou on peut également faire +1. ISL, et +2.ISL (N2 = N1 +1 et N3= N1 +2)... ou -1. ISL, et -2.ISL (N2 = N1 - 1 et N3 = N1 - 2).

Compte tenu de la valeur de l'ISL, on se contentera d'un décalage de quelques ISL pour rester compatible de photodiodes intégrables en optiques intégrée.......

Le gyromètre 50 selon l'invention est compatible d'une réalisation en optique intégrée, car il ne nécessite pas de modulateurs acousto-optique.

De plus l'utilisation de boucles OPLL est compatible des ordres de grandeurs des décalages à réaliser et d'une implémentation en photonique intégrée, ce qui permet de réduire drastiquement l'encombrement et le coût total

On définit le bloc optique du gyromètre 50 qui comprend les trajets des faisceaux optiques et les composants optiques nécessaires à la mise en œuvre dudit gyromètre (tel les modulateurs de phase) et incluant les photo-détecteurs.

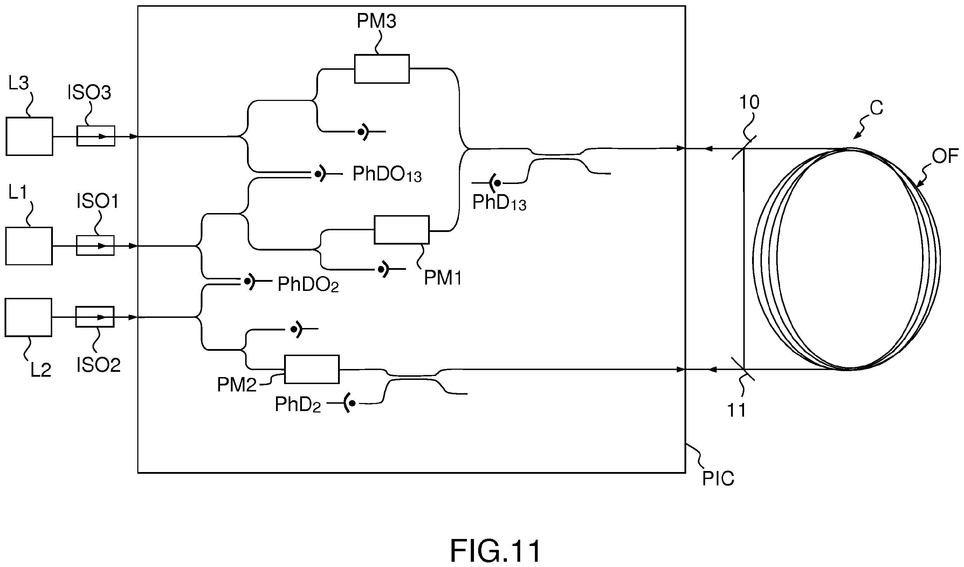

Selon un premier niveau d'intégration illustré figure 11., le bloc optique est un circuit photonique PIC réalisé en optique intégrée, par exemple sur substrat Silicium ou InP, ou tout autre matériau compatible des fonctionnalités requises. Le couplage dans et hors du circuit PIC peut se faire par la tranche ou directement hors du plan du circuit à l'aide de réseaux. De plus dans la figure 11, chaque modulateur PM1 PM2, PM3 est équipé d'une photodiode. Celle-ci permet de mesurer et de contrôler la puissance des trois faisceaux et ainsi de réduire l'effet Kerr lié à une différence de puissance entre les deux ondes contrapropagatives dans la cavité. Ce circuit PIC peut être alors connecté à une cavité à base de miroir (figure 11) ou bien de fibre. Ainsi le bloc optique est réalisé sous la forme d'au moins un circuit intégré.

Selon un niveau d'intégration supérieure, la cavité et/ou les lasers d'injection sont également réalisés en optique intégrée.

Pour des raisons de clarté la mesure des fréquences f1, f2 et f2 permettant de remonter à la longueur de la cavité et à la vitesse de rotation ne sont pas représentés. Cette mesure peut être réalisée de deux manières.

Selon une variante, on utilise une calibration des signaux de rétroaction injectés dans les OPLL et le laser maître pour remonter à f1, f2 et f3.

Selon une autre variante, on utilise les faisceaux optiques directement. Par exemple, en prélevant une partie de F1 et F3 avant le coupleur 10 (figures 5 et 11) ou avant le coupleur C1 (figures 9 et 10) et en envoyant ce signal optique sur une photodiode on mesure directement f1-f3 à l'aide d'un compteur de fréquences. Comme c'est un battement, on peut aussi directement utiliser les méthodes des gyrolasers RLG (à condition d'adapter la bande passante). De même, en prélevant et combinant F1, F3 et F2, le signal électrique de battement aura des composantes à -F3, F1-F2, F2-F3 que l'on peut filtrer et mesurer.Selon une autre variante, on utilise une configuration qui est un mix des figures 9 et 10 : on utilise les faisceaux réfléchis pour asservir (ce qui donne également un premier jeu de valeur de longueur de cavité et vitesse de rotation) et les faisceaux transmis recombinés en battement pour en déduire un deuxième jeu de valeurs longueur de cavité et vitesse de rotation.

## Revendications

1. Gyromètre optique passif résonnant (50) comprenant une cavité ( C) et fonctionnant avec trois fréquences, et comprenant :

- un premier laser d'injection (L1) configuré pour injecter un premier faisceau optique (F1) dans la cavité dans un premier sens,
- un deuxième laser d'injection (L2) configuré pour injecter un deuxième faisceau optique (F2) dans la cavité selon un sens opposé au premier sens,
- un troisième laser d'injection (L3) configuré pour injecter un troisième faisceau optique (F3) dans la cavité selon l'un des deux sens précités,
un laser parmi l'un des lasers d'injection étant choisi comme laser maître (L1) présentant une fréquence maître (f1), les deux autres lasers d'injection étant dénommés respectivement premier (L2) et deuxième (L3) lasers esclaves présentant respectivement une première (f2) et une deuxième (f3) fréquences esclaves,
- un dispositif d'asservissement maître (DA1) configuré pour asservir directement la fréquence maître (f1) à une fréquence propre correspondant à un mode de résonnance de la cavité ou pour asservir une fréquence propre correspondant à un mode de résonance de la cavité à la fréquence maître du laser maître,
- un premier étage d'asservissement comprenant un premier dispositif esclave (D2) et un deuxième (D3) dispositif esclave configurés respectivement pour générer un premier signal ($\epsilon$2) et un deuxième ($\epsilon$3) signal d'erreur fréquentielle présentant une valeur absolue minimale respectivement lorsque les première et deuxième fréquences esclaves correspondent chacune à un mode de résonance de la cavité,
- un deuxième étage d'asservissement comprenant un premier (OPLL2-1) et un deuxième (OPLL3-1) dispositif de verrouillage de phase optique comprenant respectivement un premier (Osc2) oscillateur esclave et un deuxième (Osc3) oscillateur esclave configurés pour générer un premier et un deuxième signal de décalage radiofréquence,
- lesdits premier (OPLL2-1) et deuxième (OPLL3-1) dispositifs de verrouillage de phase optique étant configurés pour rendre cohérents respectivement le premier laser esclave (L2) avec le laser maître (L1) et le deuxième laser esclave (L3) avec le laser maître (L1) et pour asservir la première (f2) et la deuxième (f3) fréquences esclaves sur des modes de résonances de la cavité différents du mode de résonance correspondant à la fréquence maître (f1),
- chaque signal de décalage radiofréquence du deuxième étage d'asservissement étant déterminé à partir du signal d'erreur fréquentielle ($\epsilon$2, $\epsilon$3) correspondant du premier étage d'asservissement, **caractérisé en ce que**
- les premier (OPLL2-1) et deuxième (OPLL3-1) dispositifs à verrouillage de phase optique comprenant respectivement un troisième (PhDO12) et un quatrième photo détecteur (PhDO13) configurés pour générer respectivement un premier et un deuxième signal de battement, respectivement entre un faisceau optique issu du laser maître (L1) et un faisceau optique issu du premier laser esclave (L2) et entre un faisceau optique issu du laser maître (L1) et un faisceau optique issu du deuxième laser esclave (L3),
- chaque signal de décalage radiofréquence présentant une fréquence de référence (f2ref, f3ref) accordable et une phase de référence ($\Phi$2ref, $\Phi$3ref), chaque dispositif de verrouillage de phase optique étant configuré pour rétroagir sur la fréquence du laser esclave (f2, f3) correspondante de manière à asservir le signal de battement sur le signal de décalage radiofréquence, la fréquence de référence étant rendue égale à un nombre entier (n1, n2) d'intervalles spectraux libres (ISL) de la cavité en utilisant un signal de correction issu du signal d'erreur fréquentielle ($\epsilon$2, $\epsilon$3) correspondant, chaque fréquences esclave (f2, f3) étant alors respectivement décalée de la fréquence maître (f1) d'une valeur correspondant à la fréquence de référence (f2ref, f3ref) correspondante,
- chaque dispositif à verrouillage de phase optique (OPLL2-1, OPLL3-1) comprenant, pour réaliser l'asservissement du signal de battement sur le signal de décalage radiofréquence :

- un comparateur de phase (PC, PC') configuré pour comparer respectivement une phase du signal de battement ou du signal converti ($\Phi$2, $\Phi$3) et la phase ($\Phi$2ref, ($\Phi$3ref) du signal de décalage radiofréquence, le comparateur étant configuré pour générer un signal d'erreur de phase ($\epsilon\Phi$, $\epsilon\Phi$'),
- une électronique de rétroaction (ER, ER') configurée pour générer un signal de correction et rétroagir sur la fréquence esclave (f2, f3) du laser esclave (L2, L3) à partir du signal d'erreur de phase ($\varepsilon\Phi$, $\varepsilon\Phi'$).

2. Gyromètre selon la revendication 1 comprenant en outre:

   - un premier photo détecteur (PhD13) configuré pour recevoir un ou des faisceaux optiques (51, 53) issus du ou des faisceaux optique injectés dans le premier sens (F1, F3) et dont au moins une partie a effectué au moins une traversée de la cavité, et
   - un deuxième photo détecteur (PhD2) configuré pour recevoir le ou les faisceaux optiques (52) issus du ou des faisceaux optique injectés dans le deuxième sens (F2) et dont au moins une partie a effectué au moins une traversée de la cavité,

   lesdits photo-détecteurs étant configurés pour générer trois signaux électriques à partir des trois faisceaux optiques reçus, chaque signal électrique étant envoyé dans le dispositif d'asservissement maître ou dans le premier ou dans le deuxième dispositif esclave correspondant.

3. Gyromètre selon l'une des revendications 1 ou 2 dans lequel le dispositif d'asservissement maître comprend :

   - un modulateur de phase maître (PM1) du faisceau optique du laser maître,
   - un dispositif de démodulation maître (DM1) disposé à la sortie du photo détecteur correspondant: un déphaseur maître, un oscillateur maître (Osc1) fonctionnant à une fréquence d'oscillation maître prédéterminée (fm1) également utilisée par le modulateur de phase maître, un mélangeur maître des signaux issus de l'oscillateur et du déphaseur maîtres, un signal d'erreur fréquentielle maître ($\varepsilon$1) étant obtenu à partir du signal issu du mélangeur maître,
   - une électronique de rétroaction maître (ER1) configurée pour générer un signal de correction à partir du signal d'erreur fréquentielle maître ($\varepsilon$1), et pour rétroagir directement sur la fréquence maître (f1) du laser maître (L1) ou sur une longueur de la cavité, la fréquence du laser maître restant fixe.

4. Gyromètre selon la revendication 3 dans lequel le modulateur de phase maître est constitué d'un signal électrique modulant directement le courant d'alimentation du laser maître (L1) à la fréquence d'oscillation maître prédéterminée (fm1).

5. Gyromètre selon l'une des revendications précédentes dans lequel le dispositif d'asservissement maître (DA1) est de type Pound Drever Hall.

6. Gyromètre selon l'une des revendications précédentes dans lequel chaque dispositif esclave (D2, D3) du premier étage d'asservissement comprend :

   - un modulateur de phase (PM2, PM3) du faisceau optique du laser esclave correspondant,
   - un dispositif de démodulation (DM2, DM3) disposé à la sortie du photo-détecteur ayant détecté le faisceau optique correspondant, et comprenant un déphaseur, un oscillateur fonctionnant à une fréquence d'oscillation prédéterminée (fm2, fm3) également utilisée par le modulateur de phase correspondant, un mélangeur des signaux issus de l'oscillateur et du déphaseur, le signal d'erreur fréquentielle ($\varepsilon$2, $\varepsilon$3) étant obtenu à partir du signal issu du mélangeur,
   - une électronique de rétroaction (ER2, ER3) configurée pour générer un signal de correction à partir du signal d'erreur fréquentielle ($\varepsilon$2, $\varepsilon$3).

7. Gyromètre selon la revendication 6 dans lequel le modulateur de phase est constitué d'un signal électrique modulant directement le courant d'alimentation du laser esclave correspondant (L2, L3) à la fréquence d'oscillation prédéterminée (fm2, fm3).

8. Gyromètre selon la revendication 1 dans lequel le nombre entier (n1, n2) est tel que la fréquence de référence correspondante (f2ref, f3ref) est comprise dans une bande passante du troisième ou du quatrième photo-détecteur correspondant.

9. Gyromètre selon la revendication 1 dans lequel chaque dispositif à verrouillage de fréquence optique (OPLL2-1, OPLL3-1) comprend un mélangeur (M, M') configuré pour convertir une fréquence du signal de battement (f2-f1, f3-f1) en une fréquence convertie (f2-f1-fdc, f3-f1-fdc') dans le domaine radiofréquence, l'asservissement s'opérant à partir de la fréquence convertie.

**10.** Gyromètre selon l'une des revendications 2 à 9 dans lequel le premier et le deuxième photo-détecteur (PHD13, PhD2) sont configurés pour recevoir des faisceaux optiques (51, 52, 53) au moins partiellement réfléchis par la cavité.

**11.** Gyromètre selon l'une des revendications 2 à 9 dans lequel le premier et le deuxième photo-détecteur (PHD13, PhD2) sont configurés pour recevoir des faisceaux optiques (51, 52, 53) transmis par la cavité.

**12.** Gyromètre selon l'une des revendications précédentes dans lequel un bloc optique comprenant les trajets des faisceaux optiques et les composants optiques nécessaires à la mise en œuvre dudit gyromètre sont réalisés sous la forme d'au moins un circuit (PIC) en photonique intégrée.

**Patentansprüche**

**1.** Passiver optischer Resonanzkreisel (50), der einen Hohlraum (C) umfasst und mit drei Frequenzen arbeitet und Folgendes umfasst:

- einen ersten Injektionslaser (L1), konfiguriert zum Injizieren eines ersten optischen Strahls (F1) in den Hohlraum in einer ersten Richtung,
- einen zweiten Injektionslaser (L2), konfiguriert zum Injizieren eines zweiten optischen Strahls (F2) in den Hohlraum in einer Richtung entgegengesetzt zur ersten Richtung,
- einen dritten Injektionslaser (L3), konfiguriert zum Injizieren eines dritten optischen Strahls (F3) in den Hohlraum in einer der beiden vorgenannten Richtungen,

wobei ein Laser aus einem der Injektionslaser als Master-Laser (L1) mit einer Master-Frequenz (f1) ausgewählt wird, wobei die beiden anderen Injektionslaser als erster (L2) bzw. zweiter (L3) Slave-Laser mit einer ersten (f2) bzw. zweiten (f3) Slave-Frequenz bezeichnet werden,

- ein Master-Servogerät (DA1), konfiguriert zum direkten Regeln der Master-Frequenz (f1) auf eine Eigenfrequenz entsprechend einer Resonanzmode des Hohlraums oder zum Regeln einer Eigenfrequenz entsprechend einer Resonanzmode des Hohlraums auf die Master-Frequenz des Master-Lasers,
- eine erste Servostufe, umfassend eine erste Slave-Vorrichtung (D2) und eine zweite (D3) Slave-Vorrichtung, die jeweils zum Erzeugen eines ersten ($\varepsilon$2) und eines zweiten ($\varepsilon$3) Frequenzfehlersignals konfiguriert sind, die jeweils einen minimalen Absolutwert aufweisen, wenn die erste und die zweite Slave-Frequenz jeweils einer Resonanzmode des Hohlraums entsprechen,
- eine zweite Servostufe, umfassend eine erste (OPLL2-1) und eine zweite (OPLL3-1) optische Phasenverriegelungsvorrichtung, die jeweils einen ersten (Osc2) Slave-Oszillator und einen zweiten (Osc3) Slave-Oszillator umfassen, die zum Erzeugen eines ersten und eines zweiten Hochfrequenz-Offsetsignals konfiguriert sind,
- wobei die erste (OPLL2-1) und die zweite (OPLL3-1) optische Phasenverriegelungsvorrichtung zum Kohärentmachen jeweils des ersten Slave-Lasers (L2) mit dem Master-Laser (L1) und des zweiten Slave-Lasers (L3) mit dem Master-Laser (L1) und zum Regeln der ersten (f2) und zweiten (f3) Slave-Frequenz auf Resonanzmoden des Hohlraums, die sich von der der Master-Frequenz (f1) entsprechenden Resonanzmode unterscheiden, konfiguriert sind,
- wobei jedes Hochfrequenz-Offsetsignal der zweiten Servostufe auf der Basis des entsprechenden Frequenzfehlersignals ($\varepsilon$2, $\varepsilon$3) der ersten Servostufe bestimmt wird, **dadurch gekennzeichnet, dass**
- die erste (OPLL2-1) und die zweite (OPLL3-1) optische Phasenverriegelungsvorrichtung jeweils einen dritten (PhD012) und einen vierten Fotodetektor (PhDO13) umfassen, konfiguriert zum Erzeugen jeweils eines ersten und eines zweiten Schwebungssignals jeweils zwischen einem vom Master-Laser (L1) ausgegebenen optischen Strahl und einem vom ersten Slave-Laser (L2) ausgegebenen optischen Strahl und zwischen einem vom Master-Laser (L1) ausgegebenen optischen Strahl und einem vom zweiten Slave-Laser (L3) ausgegebenen optischen Strahl,
- wobei jedes Hochfrequenz-Offsetsignal eine abstimmbare Referenzfrequenz (f2ref, f3ref) und eine Referenzphase ($\Phi$2ref, ($\Phi$3ref) aufweist, wobei jede optische Phasenverriegelungsvorrichtung zum Zurückwirken auf die entsprechende Frequenz des Slave-Lasers (f2, f3) konfiguriert ist, um das Schwebungssignal auf das Hochfrequenz-Offsetsignal zu regeln, wobei die Referenzfrequenz auf gleich eine ganze Zahl (n1, n2) von freien Spektralintervallen (ISL) des Hohlraums gesetzt wird, indem ein aus dem entsprechenden Frequenzfehlersignal ($\varepsilon$2, $\varepsilon$3) hervorgehendes Korrektursignal verwendet wird, wobei jede Slave-Frequenz (f2, f3) dann jeweils von der Master-Frequenz (f1) um einen Wert versetzt wird, der der entsprechenden Referenzfrequenz (f2ref, f3ref) entspricht,

- wobei jede optische Phasenverriegelungsvorrichtung (OPLL2-1, OPLL3-1) zum Realisieren der Regelung des Schwebungssignals auf das Funkfrequenz-Offsetsignal Folgendes umfasst:
- einen Phasenkomparator (PC, PC'), konfiguriert zum Vergleichen jeweils einer Phase des Schwebungssignals oder des umgewandelten Signals ($\Phi2$, $\Phi3$) und der Phase ($\Phi2ref$, ($\Phi3ref$) des Funkfrequenz-Offsetsignals, wobei der Komparator zum Erzeugen eines Phasenfehlersignals ($\varepsilon\Phi$, $\varepsilon\Phi'$) konfiguriert ist,
- eine Feedback-Elektronik (ER, ER'), konfiguriert zum Erzeugen eines Korrektursignals und zum Zurückwirken auf die Slave-Frequenz (f2, f3) des Slave-Lasers (L2, L3) auf der Basis des Phasenfehlersignals ($\varepsilon\Phi$, $\varepsilon\Phi'$).

2. Gyrometer nach Anspruch 1, das ferner Folgendes umfasst:

- einen ersten Photodetektor (PhD13), konfiguriert zum Empfangen eines oder mehrerer optischer Strahlen (51, 53), die von dem oder den in der ersten Richtung (F1, F3) eingeleiteten optischen Strahlen ausgehen und von denen mindestens ein Teil den Hohlraum mindestens einmal durchlaufen hat, und
- einen zweiten Fotodetektor (PhD2), konfiguriert zum Empfangen der ein oder mehreren optischen Strahlen (52), die von dem oder den in der zweiten Richtung (F2) injizierten optischen Strahlen ausgehen und von denen mindestens ein Teil den Hohlraum mindestens einmal durchlaufen hat,

wobei die Fotodetektoren zum Erzeugen von drei elektrischen Signalen auf der Basis von drei empfangenen optischen Strahlen konfiguriert sind, wobei jedes elektrische Signal in die Master-Servogeräte oder in die entsprechende erste oder zweite Slave-Vorrichtung gesendet wird.

3. Gyrometer nach Anspruch 1 oder 2, wobei das Master-Servogerät Folgendes umfasst:

- einen Master-Phasenmodulator (PM1) des optischen Strahls des Master-Lasers,
- einen Master-Demodulator (DM1), der am Ausgang des entsprechenden Fotodetektors angeordnet ist und Folgendes umfasst: einen Master-Phasenschieber, einen Master-Oszillator (Osc1), der mit einer vorbestimmten Master-Oszillationsfrequenz (fm1) arbeitet, die ebenfalls vom Master-Phasenmodulator verwendet wird, einen Master-Mixer für Signale des Master-Oszillators und des Master-Phasenschiebers, wobei ein Master-Frequenzfehlersignal ($\varepsilon1$) auf der Basis des Signals vom Master-Mixer abgeleitet wird,
- eine Master-Feedback-Elektronik (ER1), konfiguriert zum Erzeugen eines Korrektursignals auf der Basis des Master-Frequenzfehlersignals ($\varepsilon1$) und zum direkten Zurückwirken auf die Master-Frequenz (f1) des Master-Lasers (L1) oder auf eine Länge des Hohlraums, wobei die Frequenz des Master-Lasers fest bleibt.

4. Gyrometer nach Anspruch 3, wobei der Master-Phasenmodulator aus einem elektrischen Signal besteht, das den Versorgungsstrom des Master-Lasers (L1) direkt auf die vorbestimmte Master-Oszillationsfrequenz (fm1) moduliert.

5. Gyrometer nach einem der vorherigen Ansprüche, wobei der Master-Server (DA1) vom Typ Pound Drever Hall ist.

6. Gyrometer nach einem der vorherigen Ansprüche, wobei jede Slave-Vorrichtung (D2, D3) der ersten Servostufe Folgendes umfasst:

- einen Phasenmodulator (PM2, PM3) des optischen Strahls des entsprechenden Slave-Lasers,
- einen Demodulator (DM2, DM3), der am Ausgang des Fotodetektors angeordnet ist, der den entsprechenden optischen Strahl erfasst hat, und einen Phasenschieber, einen Oszillator, der mit einer vorbestimmten Oszillationsfrequenz (fm2, fm3) arbeitet, die ebenfalls von dem entsprechenden Phasenmodulator verwendet wird, einen Mixer für vom Oszillator und vom Phasenschieber ausgegebene Signale, umfasst, wobei das Frequenzfehlersignal ($\varepsilon2$, $\varepsilon3$) auf der Basis des vom Mischer ausgegebenen Signals gewonnen wird,
- eine Feedback-Elektronik (ER2, ER3), konfiguriert zum Erzeugen eines Korrektursignals auf der Basis des Frequenzfehlersignals ($\varepsilon2$, $\varepsilon3$).

7. Gyrometer nach Anspruch 6, wobei der Phasenmodulator aus einem elektrischen Signal besteht, das direkt den Versorgungsstrom des entsprechenden Slave-Lasers (L2, L3) mit der vorbestimmten Oszillationsfrequenz (fm2, fm3) moduliert.

8. Gyrometer nach Anspruch 1, wobei die ganze Zahl (n1, n2) so ist, dass die entsprechende Referenzfrequenz (f2ref, f3ref) innerhalb eines Passbands des entsprechenden dritten oder vierten Fotodetektors liegt.

9. Gyrometer nach Anspruch 1, wobei jede optische Frequenzverriegelungsvorrichtung (OPLL2-1, OPLL3-1) einen Mixer (M, M') umfasst, der zum Umwandeln einer Frequenz des Schwebungssignals (f2-fl, f3-fl) in eine umgewandelte Frequenz (f2-f1-fdc, f3-f1-fdc') im Radiofrequenzbereich konfiguriert ist, wobei die Regelung auf der Basis der umgewandelten Frequenz erfolgt.

10. Gyrometer nach einem der Ansprüche 2 bis 9, wobei der erste und der zweite Photodetektor (PHD13, PhD2) so konfiguriert sind, dass sie optische Strahlen (51, 52, 53) empfangen, die zumindest teilweise von dem Hohlraum reflektiert werden.

11. Gyrometer nach einem der Ansprüche 2 bis 9, wobei der erste und der zweite Photodetektor (PHD13, PhD2) so konfiguriert sind, dass sie vom Hohlraum durchgelassene optische Strahlen (51, 52, 53) empfangen.

12. Gyrometer nach einem der vorherigen Ansprüche, wobei ein optischer Block, der die Wege der optischen Strahlen umfasst, und die für den Betrieb des Gyrometers erforderlichen optischen Komponenten in Form von mindestens einer photonischen integrierten Schaltung (PIC) hergestellt sind.

## Claims

1. Passive resonant optical gyroscope (50) comprising a cavity (C) and operating with three frequencies, and comprising:

   - a first injecting laser (L1) configured to inject a first optical beam (F1) into the cavity in a first direction,
   - a second injecting laser (L2) configured to inject a second optical beam (F2) into the cavity in a direction opposite the first direction,
   - a third injecting laser (L3) configured to inject a third optical beam (F3) into the cavity in one of the two aforementioned directions,

   one laser amongst one of the injecting lasers, being selected as master laser (L1), having a master frequency (f1), the two other injecting lasers, being respectively denoted the first (L2) and second (L3) slave lasers, respectively having a first (f2) slave frequency and a second (f3) slave frequency,

   - a master servocontrol device (DA1) configured to directly servocontrol the master frequency (f1) to an eigenfrequency corresponding to a resonant mode of the cavity or to servocontrol an eigenfrequency corresponding to a resonant mode of the cavity to the master frequency of the master laser,
   - a first servocontrol stage comprising a first slave device (D2) and a second (D3) slave device that are configured to respectively generate a first ($\varepsilon$2) and a second ($\varepsilon$3) frequency error signal having a minimum absolute value when the first and second slave frequencies each correspond to a resonant mode of the cavity, respectively; and
   - a second servocontrol stage comprising a first (OPLL2-1) and a second (OPLL3-1) optical phase-locking device respectively comprising a first (Osc2) slave oscillator and a second (Osc3) slave oscillator that are configured to generate a first and a second radiofrequency offset signal,
   - said first (OPLL2-1) and second (OPLL3-1) optical phase-locking devices being configured to respectively make the first slave laser (L2) coherent with the master laser (L1) and the second slave laser (L3) coherent with the master laser (L1) and to servocontrol the first (f2) and second (f3) slave frequencies to resonant modes of the cavity that are different from the resonant mode corresponding to the master frequency (f1),
   - each radiofrequency offset signal of the second servocontrol stage being determined from the corresponding frequency error signal ($\varepsilon$2, $\varepsilon$3) of the first servocontrol stage, **characterised in that**
   - the first (OPLL2-1) and second (OPLL3-1) optical phase-locking devices comprising respectively a third (PhDO12) and a fourth photodetector (PhDO13) configured to respectively generate a first and a second beat signal, respectively between an optical beam output from the master laser (L1) and an optical beam output from the first slave laser (L2) and between an optical beam output from the master laser (L1) and an optical beam output from the second slave laser (L3),
   - each radio frequency shift signal having a tunable reference frequency (f2ref, f3ref) and a reference phase ($\Phi$2ref, $\Phi$3ref), each optical phase locking device being configured to feedback on the corresponding frequency of the slave laser (f2, f3) so as to slave the beat signal to the radio frequency offset signal, the reference frequency being made equal to an integer number (n1, n2) of free spectral intervals (ISL) of the cavity by using a correction signal from the corresponding frequency error signal (c2, c3), each slave frequency (f2, f3) then being respectively shifted from the master frequency (f1) by a value corresponding to the corresponding reference frequency (f2ref, f3ref),

- each optical phase-locking device (OPLL2-1, OPLL3-1) comprising, to achieve the slaving of the beat signal to the radio frequency offset signal:
- a phase comparator (PC, PC') configured to respectively compare a phase of the beat signal or of the converted signal ($\Phi2$, $\Phi3$) and the phase ($\Phi2ref$, ($\Phi3ref$) of the radio frequency offset signal, the comparator being configured to generate a phase error signal ($\epsilon\Phi$, $\epsilon\Phi'$),
- feedback electronics (ER, ER') configured to generate a correction signal and feedback on the slave frequency (f2, f3) of the slave laser (L2, L3) from the phase error signal ($\epsilon\Phi$, $\epsilon\Phi'$).

2. Gyroscope according to Claim 1, further comprising:

- a first photodetector (PhD13) configured to receive one or more optical beams (51, 53) obtained from the one or more optical beams injected in the first direction (F1, F3) and at least one portion of which has made at least one pass through the cavity, and
- a second photodetector (PhD2) configured to receive the one or more optical beams (52) obtained from the one or more optical beams injected in the second direction (F2) and at least one portion of which has made at least one pass through the cavity,

said photodetectors being configured to generate three electric signals from the three received optical beams, each electric signal being sent to the master servocontrol device or to the corresponding first or second slave device.

3. Gyroscope according to either of Claims 1 and 2, wherein the master servocontrol device comprises:

- a master phase modulator (PM1) for modulating the optical beam of the master laser,
- a master demodulating device (DM1) disposed at the corresponding output of the photodetector and comprising: a master phase shifter, a master oscillator (Osc1) operating at a preset master oscillation frequency (fm1) that is also used by the master phase modulator, a master mixer for mixing the signals output by the master oscillator and master phase shifter, a master frequency error signal ($\epsilon1$) being obtained from the signal output by the master mixer,
- master feedback electronics (ER1) configured to generate a correction signal from the master frequency error signal ($\epsilon1$), and to directly feedback on the master frequency (f1) of the master laser (L1) or on a length of the cavity, the frequency of the master laser remaining constant.

4. Gyroscope according to Claim 3, wherein the master phase modulator consists of an electric signal that directly modulates the supply current of the master laser (L1) at the preset master oscillation frequency (fm1).

5. Gyroscope according to one of the preceding claims, wherein the master servocontrol device (DA1) is a Pound-Drever-Hall type device.

6. Gyroscope according to one of the preceding claims, wherein each slave device (D2, D3) of the first servocontrol stage comprises:

- a phase modulator (PM2, PM3) for modulating the optical beam of the corresponding slave laser,
- a demodulating device (DM2, DM3) disposed at the output of the photodetector having detected the corresponding optical beam, and comprising a phase shifter, an oscillator operating at a preset oscillation frequency (fm2, fm3) that is also used by the corresponding phase modulator, and a mixer for mixing the signals output by the oscillator and phase shifter, the frequency error signal ($\epsilon2$, $\epsilon3$) being obtained from the signal output by the mixer,
- feedback electronics (ER2, ER3) configured to generate a correction signal from the frequency error signal ($\epsilon2$, $\epsilon3$).

7. Gyroscope according to Claim 6, wherein the phase modulator consists of an electric signal that directly modulates the supply current of the corresponding slave laser (L2, L3) at the preset oscillation frequency (fm2, fm3).

8. Gyroscope according to Claim 1, wherein the integer number (n1, n2) is such that the corresponding reference frequency (f2ref, f3ref) is comprised in a passband of the corresponding third or fourth photodetector.

9. Gyroscope according to Claim 1, wherein each optical phase-locking device (OPLL2-1, OPLL3-1) comprises a mixer (M, M') configured to convert a frequency of the beat signal (f2-f1, f3-f1) into a converted frequency (f2-f1-fdc, f3-f1-fdc') in the radiofrequency domain, the servocontrol being carried out on the basis of the converted frequency.

10. Gyroscope according to one of Claims 2 to 9, wherein the first and second photodetectors (PHD13, PhD2) are configured to receive optical beams (51, 52, 53) that are at least partially reflected by the cavity.

11. Gyroscope according to one of Claims 2 to 9, wherein the first and second photodetectors (PHD13, PhD2) are configured to receive optical beams (51, 52, 53) transmitted by the cavity.

12. Gyroscope according to one of the preceding claims, wherein an optical block comprising the paths of the optical beams and the optical components required to implement said gyroscope are produced in the form of at least one photonic integrated circuit (PIC).

FIG.1

FIG.2

FIG.3

FIG.4

FIG.5

EP 3 228 987 B1

FIG.6

FIG.7

FIG.8

FIG.9

FIG.10

EP 3 228 987 B1

FIG.11

**EP 3 228 987 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1302311
- EP 2813815 A2